# EUROPÄISCHE PATENTSCHRIFT

(11) **EP 0 865 749 B1**
(45) Veröffentlichungstag und Bekanntmachung des Hinweises auf die Patenterteilung: **28.04.1999**
(21) Anmeldenummer: 97104260.1
(22) Anmeldetag: 13.03.1997
(51) Int. Cl.: A47J 31/08, A47J 31/44

(54) **Filtriervorrichtung, Filterelement und Verfahren zur Herstellung des Filterelements, das zum Herstellen von Brühgetränken dient**
Filter device, filter element and method for producing a filter element used for brewing drinks
Dispositif pour filtrer, élément de filtration et méthode pour fabriquer une élément de filtration utilisé pour faire des boissons infusées

(43) Veröffentlichungstag der Anmeldung: 23.09.1998
(73) Patentinhaber: Braun Aktiengesellschaft, Frankfurt am Main (DE)
(72) Erfinder: Bielfeldt, Uwe, Dr., 61476 Kronberg (DE); Kleemann, Christof, 61476 Kronberg (DE); Stücher, Reinhard, 57258 Freudenberg (DE); Trebitz, Bernd, Dr., 35510 Butzbach (DE); Emmerich, Horst, 65760 Eschborn (DE); Friedrich, Dieter, 65817 Eppstein (DE); Ziesch, Christian, 61169 Friedberg (DE); Gliemroth, Frank, 65824 Schwalbach (DE)

(56) Entgegenhaltungen:
- EP-A- 0 253 246
- EP-A- 0 741 988
- DE-A- 4 038 023
- FR-A- 2 691 059
- US-A- 1 615 542
- US-A- 2 546 874
- US-A- 4 735 719
- US-A- 5 171 457

## Beschreibung

Die erste Erfindung betrifft eine Filtriervorrichtung zum Herstellen von Brühgetränken.

Weiterhin betrifft eine zweite Erfindung das in die obengenannte Filtriervorrichtung einsetzbare Filterelement.

Schließlich betrifft eine dritte Erfindung das zur Herstellung des Filterelements erforderliche Verfahren.

Aus der US-A-3,089,405 ist bereits eine Filtriervorrichtung für eine Kaffeemaschine bekannt, die zum Herstellen von Brühgetränken dient. Die Filtriervorrichtung besteht aus einem ringähnlichen Abschnitt eines Wasserrohres, kurz Ringleitung genannt, an dessen Außenseite eine Filtertüte frei eingehängt ist. Die Filtertüte ist mit Kaffeemehl befüllbar, wobei zum Zwecke der Filtration heißes Wasser über deren Öffnung einleitbar ist. Das über das offene Ende des ringförmigen Wasserrohrs eindringende heiße Wasser fließt nach Aufnahme von Extraktionsstoffen (Extraktionsvorgang) aus dem Extrahiergut an der Außenwand der Filtertüte frei ab und wird in einem darunter abgestellten Gefäß aufgefangen.

Zur Montage der Filtertüte wird diese über Haltemittel am Filterträger befestigt. Dazu ist in die Filtertüte an ihrem oberen Ende ein elastisches Band oder eine elastische Schnur eingezogen, die zusammen mit der Öffnung der Filtertüte von außen um die als Filterträger ausgebildete Ringleitung gezogen wird. Nach Loslassen der aufgeweiteten Öffnung der Filtertüte oberhalb der Ringleitung zieht sich die elastische Schnur derart zusammen, daß der Durchmesser der Filtertüte oberhalb der Ringleitung kleiner wird als der Abschnitt um die Ringleitung herum. Auf diese Weise ist die Filtertüte an der Ringleitung befestigt, damit sie während des Brühbetriebs nicht zu Boden fallen kann.

Abgesehen von der verhältnismäßig aufwendigen Montage der Filtertüte an der Ringleitung - denn die Öffnung der Filtertüte muß durch Auseinanderziehen der elastischen Schnur so weit geöffnet werden, bis sie von unten her über die Außenfläche der Ringleitung gezogen werden kann - muß in sehr aufwendiger Weise in den oberen Endabschnitt der Filtertüte ein elastisches Band oder eine elastische Schnur eingezogen sein, wenn das Filterelement durch die elastische Schnur am Filterträger gehalten werden soll.

Eine derartige Befestigung einer Filtertüte an einem Filterträger einer Brühgetränkezubereitungsmaschine ist aufwendig und kompliziert, da es letztendlich von der Bedienungsperson abhängt, wie geschickt sie die Öffnung des Filterelements aufweitet, um sie dann über die Ringleitung zu stülpen und wie gut sie anschließend das Filterelement am Filterträger ausrichtet, damit die Längsachse des Filterelements im wesentlichen senkrecht verläuft; denn bei einer unsachgemäßen Montage kann es nämlich leicht vorkommen, daß die Filterpapiertüte schräg hängt, reißt und/oder vom Filterträger gar wieder herunterfällt, was zu unangenehmen Verbrühungen einer Bedienungsperson führen kann.

Die Notwendigkeit der Benutzung einer extra am Filterelement angebrachten elastischen Schnur oder Gummirings und die aufwendige Montage dieses Gummirings an der Filtertüte ist weniger komfortabel und erhöht den Preis der einzelnen Filtertüte, was sich insbesondere dann deutlich bemerkbar macht, wenn täglich mehrmals Kaffee gebrüht wird. Eine derartige Filtertütenbefestigung ist wohl daher nur dort einsetzbar, wo die Tüte selbst aus stabilem Filtermaterial besteht.

Aus der EP-A-0 741 988 ist weiterhin eine Filtriervorrichtung bekannt, bei der das Filterelement aus zwei halbschalenförmigen Papierstreifen einteilig zusammengesetzt ist. Das Filterelement weist im Bereich seiner Öffnung einen freien Rand auf, der so weit umgefaltet ist, daß er eine Tasche bildet. Die Tasche öffnet sich nach unten und verläuft im wesentlichen in Richtung der Wandung des Aufnahmebereichs. Der Filterträger besteht aus einem aus Draht gebogenen, im wesentlichen runden Kreisabschnitt, an den an den gegenüberliegenden Enden ein drahtförmiger Halter und ein Zapfenteil angebogen ist. Die halbkreisförmigen Abschnitte des Halters dienen zum Halten der Filtriervorrichtung, während die diametral gegenüberliegenden Auflagenteile zum Abstützen der Filtriervorrichtung auf dem Rand eines Gefäßes vorgesehen sind.

Liegt bei dieser Filtriervorrichtung das Ringteil nicht exakt im tiefsten Punkt der Tasche, also dort, wo der Rand zum Filterkörper hin gefaltet ist, so kann es hier nicht vorkommen, daß, wenn beim Brühvorgang das Wasser langsam in das Kaffeemehl, in den Aufnahmeraum und so auch in den Rand des Filterelements eindringt, sich der Rand aufgrund des zunehmenden Gewichtes des Filterelements nach oben öffnet und nach unten herausfällt, weil die Filterlagen und die Ränder aus einem Gewebeverbund aus wärmeversiegelbaren Fasern oder ähnlichen Webstoffen hergestellt sind und diese Elemente sogar noch durch eine Wärmeversiegelung dieses Gewebeverbunds oder ähnlichen Maßnahmen verbunden sind. Die Kosten für ein derartiges aus Gewebeverbund hergestelltes Filterelement sind allerdings nicht unerheblich, insbesondere dann, wenn dieses Filterelement als Einwegfilter, also in großen Stückzahlen benutzt werden soll. Bei der Benutzung als Mehrwegefilter entstehen dieselben, bereits oben erwähnten Kostenprobleme.

Aus der DE-A-40 38 023 ist ein Verfahren zur Herstellung eines Zwei- oder Mehrschalenbehälters aus Pappe oder einem ähnlichen Werkstoff bekannt. Bei diesem Verfahren wird das Papier, auch Zuschnitt genannt, unter Einziehen von weiterem Material einerseits aus der Randseite der Matrize und andererseits aus der Zuschnittseite gezogen. Dabei hat sich zwischen den beiden Matrizen ein Materialvorrat gebildet, der als Ausgleich für die Formgebung des Papiers im Matrizenraum zur Verfügung steht, ohne daß Überbeanspruchungen des Materials erfolgen. Bei diesem Verfahren wird also durch Einziehen von Materialvorrat ein Behälter ausgeformt.

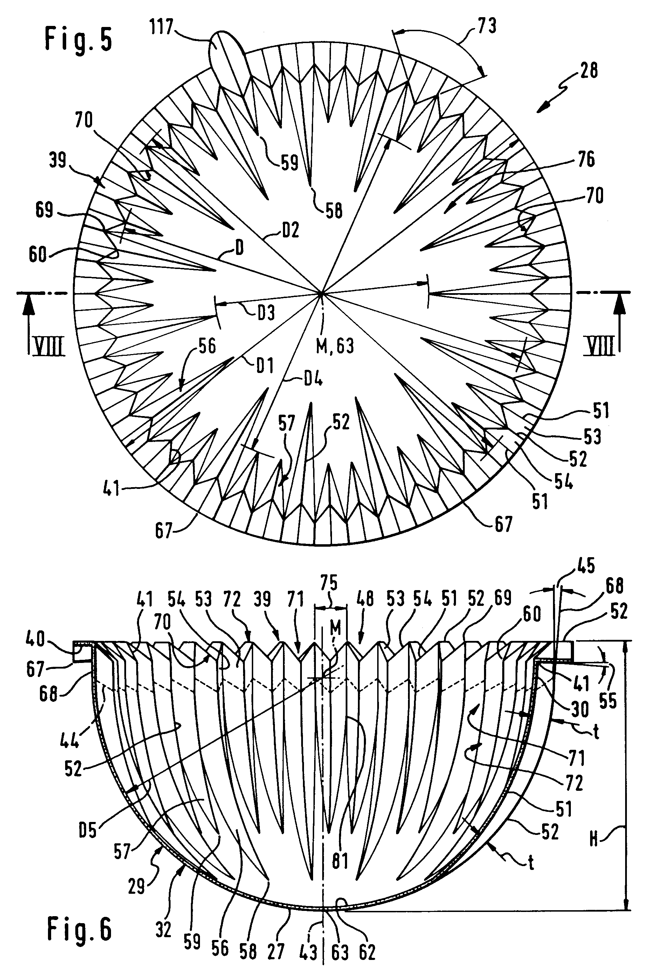

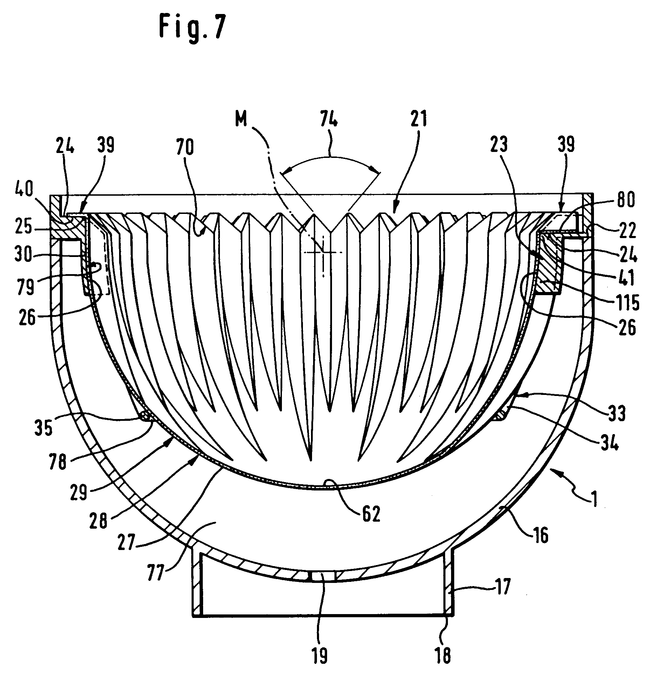

Aus der US-A-5,171,457 ist insbesondere aus Fig. 6 ein mit einem Rand versehener Kaffeefilterbehälternapf bekannt, in den gemäß Fig. 7 ein ebenfalls mit einem Rand versehener Kaffeefilter einsetzbar ist. Dabei stützt sich der Rand des Kaffeefilters am Rand des Kaffeefilterbehälternapfes ab. Die zylindrische Wand des topfförmigen Kaffeefilters weist zickzackförmige, nach außen gerichtete, offene Falten auf. Die offenen Falten setzen sich in dem etwa rechtwinklig zur zylindrischen Wand verlaufenden Rand fort, indem diese im Rand offenbar verpreßt sind.

Aus der FR-A-2 691 059 ist schließlich noch eine aus Filterpapier bestehende Filterkartusche bekannt, deren Öffnung mit einem sich etwa rechwinklig von der Filterkartusche weg erstreckenden Rand versehen ist. Die Öffnung der Filterkartusche ist über den Rand mit einem Filterpapierdeckel verschlossen. Der Rand garantiert eine einwandfreie Lage der Filterkartusche im Inneren eines metallischen Filters einer Kaffeemaschine.

Aufgabe der ersten Erfindung ist es daher, eine Filtriervorrichtung der eingangs genannten Art zu schaffen, mit der sehr gute Brühergebnisse bei kurzer Brühzeit und günstigen Herstellkosten erzielt werden und deren Handhabung besonders einfach ist.

Die Aufgabe der zweiten Erfindung ist es, das für die Filtriervorrichtung benutzte Filterelement besonders einfach und handlich auszugestalten, durch das ohne zusätzliche Bauteile eine stabile Halterung im Filterträger gewährleistet wird und das besonders einfach und kostengünstig aufgebaut ist.

Aufgabe der dritten Erfindung ist es schließlich, ein Verfahren zur Herstellung dieses erfindungsgemäßen Filterelements zu schaffen, mit dem auch ein dünnes Filterelement ohne Überbeanspruchung des Materials auf einfache Weise kostengünstig und in großen Stückzahlen hergestellt werden kann.

Die Aufgabe der ersten Erfindung wird durch die Merkmale des Patentanspruchs 1 gelöst. Durch die Ausbildung des Randes mit den offenen Falten im Rand wird das aus normalem Filterpapier hergestellte Filterelement in axialer Richtung versteift und kann sich so sicher über seine große Tragfläche an der am Filterträger ausgebildeten Auflagefläche abstützen. Das Filterelement läßt sich durch den versteiften Rand einfacher in den Filterträger einlegen, bis sich anschließend der Rand des Filterelements an der Auflage des Filterträgers abstützt. Ein umständliches Auffalten des Filterelements von Hand ist beim Einsetzen in den Filterträger nicht erforderlich, da das Filterelement bereits seine für den Brühbetrieb erforderliche Endform aufweist. Durch den versteiften Rand hält das Filterelement auch dann im eingehängten Zustand im Filterträger seine Form, wenn das Filterpapier von Wasser durchnäßt wird. Dabei tragen sowohl dieoffenen Falten wie der Rand selbst zur Versteifung des Filterpapiers bei, ohne daß teilefremde Versteifungsmittel benötigt werden müssen. Als Filterpapier können herkömmliche Filterpapierqualitäten für elektrisch betriebene oder sonstige Getränkezubereitungseinheiten des häuslichen Bedarfs verwendet werden.

Unter offenen Falten wird hier verstanden, daß in der Richtung der Längsachse des Filterelements, also in der Richtung, in der die einzelnen Filterelemente voneinander getrennt werden, kein einziger Abschnitt der Oberflächen der Falten verdeckt ist, d.h., in Blickrichtung von oben senkrecht auf die gedachte Längsachse des Filterelements muß praktisch die gesamte Oberfläche des Filterelements sichtbar sein, so wie dies entsprechend bei einem ebenen Filterelement der Fall ist, allerdings sind hier die Flächen aufgrund des nicht schrägen Verlaufs nicht verkürzt sichtbar, was aber gerade bei dem dreidimensionalen Verlauf des Ringabschnittes und der Wand des Aufnahmebereichs der Fall ist.

Durch die Bildung von offenen Falten wird erfindungsgemäß eine besonders große Tragefläche im Bereich des Randes des Filterelements erreicht, wodurch auf diese Weise auch eine besonders große belastbare Oberfläche im Bereich des Randes des Filterelements erzielt wird, um so die durch den eingenäßten Kaffeekuchen für Filterpapier verhältnismäßig hohen Abstützkräfte auf eine große Papierfläche des Filterelements zu verteilen. Hierdurch werden die auftretenden Zugspannungen - denn diese treten bei nassem Filterpapier im wesentlichen nur noch auf - unterhalb der für das verwendete Filterpapier liegenden zulässigen Zugspannungen gehalten. Dadurch ist es möglich, besonders dünnes und gut für Extraktionsstoffe durchlässiges Filterpapier zu verwenden, was sich sowohl im günstigen Preis des erfindungsgemäßen Filterelements wie in der sehr guten Getränkequalität, insbesondere bei Kaffee, vorteilhaft niederschlägt.

Durch die erste Erfindung wird eine besonders einfache Filtriervorrichtung geschaffen, bei der das Filterelement durch sein einfaches Handling problemlos in den Filterträger eingesetzt werden kann, bis es bereits frei im Filterträger hängt und sich dann mit seinem gesamten Gewicht inklusive des Kaffeemehls über seinen Rand an der Auflage des Filterträgers abstützt. Dabei werden keine zusätzlichen Teile als Haltemittel für das Filterelement benötigt. Ein derartig frei hängendes, einzig und allein aus Filterpapier hergestelltes Filterelement führt in Verbindung mit dem erfindungsgemäßen Filterträger beim Brühvorgang zu besonders guten Extraktionsergebnissen, da das heiße Wasser nahezu ungehindert an der Außenfläche des Filterelements abfließen kann. Dabei wird auch ein verhältnismäßig schnelles Durchlaufen des heißen Wassers durch das Extraktionsgut, insbesondere bei Kaffeemehl, erreicht, so daß Bitterstoffe und sonstig unerwünschte Geschmacksstoffe nicht aus dem Kaffeemehl in das heiße Wasser gelöst werden. Dies führt zu einem besonders aromatischen und wohlschmeckenden Kaffeegetränk. Durch das verhältnismäßig schnelle und gleichmäßige Durchströmen des heißen Wassers durch das Kaffeemehl in ein unterhalb der Filtriervorrichtung ausgebildetes Gefäß kühlt sich die Flüssigkeit von der Zeit des Einlaufs bis zur Zeit des Auslaufs durch die Filtriervorrichtung kaum merkbar ab, so daß das Brühgetränk auch nach dem Extrahiervorgang ohne Fremdbeheizung eine optimale Temperatur aufweist.

Durch die Merkmale des Patentanspruchs 2 läßt sich das Filterelement neben der einfacheren Herstellung auch einfacher Handhaben, da der Rand das Ende der Öffnung des Filterelements bildet. Zwar ist es auch durchaus denkbar, den Rand durch Faltung im mittleren Bereich des Filterelements anzubringen, wenn dies die Abmessungen des Filterträgers nicht anders zuließen, bei dieser Lösung müßte aber dann der über den Rand nach oben hinausstehende Bereich des Filterelements so ausgestaltet sein, daß er auch im nassen Zustand seine Form beibehält.

Dadurch, daß gemäß den Merkmalen des Patentanspruchs 3 auch der den Aufnahmeraum begrenzende Bereich des Filterelements offene Falten aufweist, die in am Filterträger ausgebildete entsprechende Erhebungen und Vertiefungen eingreifen, übernimmt auch dieser Bereich einen gewissen Anteil der Tragefunktion und stützt das Filterelement auch in diesem Bereich ab. Gleichzeitig wird das Filterelement zusätzlich über diesen Bereich besser zentriert. Durch die Flächenvergrößerung des den Aufnahmeraum begrenzenden Bereichs infolge der hier zusätzlich eingesetzten Falten wird auch in diesem Bereich die Belastbarkeit des Filterelements erhöht, damit auch in nassem Zustand des Filterelements dieses den ebenfalls eingenäßten Kaffeekuchen am Filterträger hält, ohne daß dabei das Filterelement vom Filterträger abrutscht oder gar wegen Überbeanspruchung des Filterpapiermaterials einreißt.

An dieser Stelle sei noch bemerkt, daß bei dem erfindungsgemäßen Filterelement der Durchmesser am Übergang von dem den Aufnahmeraum begrenzenden Bereich zum Rand immer etwas größer sein sollte als die die Auflagefläche des Filterträgers umgebende Öffnung, damit der Rand des Filterelements stets mit seiner ganzen Tragefläche auf der Auflagefläche aufliegen kann. Beim Einsetzen des Filterelements in den Filterträger sollte nämlich der die Auflagefläche des Filterträgers begrenzende Bereich des Aufnahmeraums des Filterelements so weit radial federnd nach innen gedrückt werden, bis die Tragefläche am Rand des Filterelements an der Auflagefläche bündig anliegt. Hierdurch bleibt das Filterelement stets spielfrei im Filterträger liegen und es wird gleichzeitig über diesen in seiner Lage zentriert. Der den Aufnahmeraum begrenzende Bereich sollte also in seinem Übergangsbereich immer federnd gegen den Filterträger gedrückt werden, so daß auch hierdurch die Abstützung des Filterelements im Fiterträger selbst sowie die Handhabung beim Einsetzen des Filterelements verbessert wird. Durch die spielfreie Lage des Filterelements im Filterträger können die einzelnen Handgriffe von einer Bedienungsperson besser kontrolliert werden, was Beschädigungen am Filterelement vermeidet. Sobald das Filterelement dann im Brühvorgang naß wird, verschwinden diese Spannungen, allerdings bleibt dann auch das Filterelement am Filterträger haften.

Anstelle des aus einer im wesentlichen breiteren Fläche gebildeten Übergangsbereiches kann dieser auch gemäß den Merkmalen des Patentanspruchs 4 von einem in Fließrichtung nach unten offenen Korb gebildet werden oder es kann sich an den Übergangsbereich ein Korb anschließen. Der Korb kann dabei beispielsweise an den Filterträger einteilig angespritzt sein, er kann aber auch als Einzelteil in den Filterträger nachträglich eingesetzt werden. Der Korb besteht aus einzelnen Verstrebungen, damit eine möglichst geringe Fläche an der Außenfläche des Filterelements anliegt, um so einen nahezu ungehinderten Abfluß des Brühgetränks zu ermöglichen. Der Korb dient einerseits neben der Auflagefläche als zusätzliches Haltemittel für das Filterelement und andererseits zentriert er das Filterelement im Filterträger.

Damit das Brühgetränk praktisch völlig ungehindert an der Außenfläche des Filterelements abfließen kann, sind die Merkmale des Patentanspruchs 5 vorgesehen. Dabei sind dann die Verstrebungen im wesentlichen so weit oberhalb des Filterelements angeordnet, daß sie den Durchfluß des Brühgetränks durch das Filterelement praktisch überhaupt nicht mehr behindern.

Gemäß einer weiteren erfindungsgemäßen Ausbildung nach Anspruch 6 sind die Auflagefläche des Filterträgers und die Tragefläche des Filterelements so gestaltet, daß im Brühbetrieb zwischen Filterelement und Filterträger eine Wasserschicht eindringt, die in diesem Bereich eine Adhäsionswirkung hervorruft, welche dann ihrerseits zu einer weiteren zusätzlichen Halterung des Filterelements am Filtergehäuse beiträgt. Diese zusätzlichen Haltemittel greifen also erst dann, wenn das Filterelement von Flüssigkeit durchnäßt ist, also wenn der Kaffeekuchen durch Aufnahme von Wasser besonders schwer geworden ist. Durch die einsetzende Adhäsionswirkung kann die Tragefläche des Filterelements sogar reduziert werden, ohne daß das von Wasser durchtränkte und somit verhältnismäßig schwere Filterelement inklusive des nassen Kaffeekuchens aus dem Filterträger herausgleitet. Da das zum Filtrieren von Extraktionsgütern verwendete Filterpapier feinporig und somit mikroporös ausgebildet ist, kriecht nämlich infolge der auftretenden Kapillarwirkung bei Befeuchtung des vom Aufnahmeraum des Filterelements aufgenommenen Kaffeemehls Flüssigkeit besonders gut an der noch trockenen Wand des Filterelements in den Übergangsbereich und von dort in den Rand hinein (Anspruch 7).

Durch diese zusätzliche Unterstützungsmaßnahme am Filterelement gemäß Anspruch 7 können äußerst dünne Filterpapiere eingesetzt werden, ohne daß diese aus dem Fiterträger herausgleiten. Gerade in dem Zustand, wenn Filterpapier naß wird und daher seine Biegesteifigkeit nahezu vollständig verliert, wird durch die Adhäsionswirkung eine zusätzliche Haltekraft erzeugt, durch die das Filterelement nicht seine Ursprungsform verliert und zusätzlich noch sicher im Filterträger gehalten wird. Um möglichst große Adhäsionskräfte zu erhalten, ist es vorteilhaft, wenn die Trageflächen des Filterelements am Filterträger besonders groß sind. Dies wird einerseits durch die offenen Falten und andererseits durch den verhältnismäßig großen Durchmesser des Filterelements erreicht.

Bei einem Filterelement, bei dem in den Randbereich kein Wasser eindringen kann, was beispielsweise durch eine am Filterelement ausgebildete Wassersperrschicht, wie beispielsweise Kunststoff oder ähnliche in das Filterpapier eindringende Flüssigkeiten erreicht werden kann, ist, obwohl keine Adhäsionswirkung in dem nunmehr trockenen Randbereich auftreten kann, die Steifigkeit des Filterelements dennoch gegeben, da durch die Falten der Rand und gegebenenfalls auch der Übergangsbereich ausreichend verfestigt bzw. versteift wurde. Erstmals wird also auf einfache Weise ein hängendes, aus Filterpapier hergestelltes Filterelement geschaffen, das sich ohne zusätzliche Unterstützungsmittel sicher im Filterträger abstützt. Hierdurch ergeben sich Handhabungsvorteile bei besserem Brühergebnis.

Durch die Merkmale des Patentanspruchs 8 wird der Sitz des Filterelements am Filterträger dadurch verbessert, daß der Winkel zwischen der Auflage des Filterträgers und der vertikalen Achse der Filtriervorrichtung kleiner gleich 90° ist. Bei dieser Ausbildung verhakt sich das Filterelement förmlich an der schräg nach außen und nach unten verlaufenden Auflagefläche des Filterträgers, wobei insbesondere an der Ecke am Übergang der Tragefläche zum Übergangsbereich des Filterelements die höchste Kraft auf das Filterpapier ausgeübt wird.

Obwohl die oben beschriebenen Haltemaßnahmen für das Filterelement (Rand, Übergangsbereich, Korb, radiale Vorspannung des Filterelements am Übergangsbereich und Adhäsion) vollkommen ausreichen, kann zusätzlich noch eine gegen den Rand des Filterelements wirkende Gegenhaltevorrichtung gewählt werden, die die Tragefläche des Filterelements gegen die Auflagefläche am Filterträger drückt (Anspruch 9). Dabei genügt es bereits, wenn die Gegenhaltevorrichtung aufgrund ihres Eigengewichtes leicht auf die der Tragefläche gegenüberliegende Außenfläche des Randes des Filterelements gelegt wird. Zusätzlich zur Adhäsionswirkung übt dann noch die Gegenhaltevorrichtung auf den Rand des Filterelements eine Auflagekraft aus. Die Gegenhaltevorrichtung kann aus Kunststoff oder sonstigem leicht herzustellendem Material gefertigt sein. Sie kann aber auch Teil einer am Filterträger nach oben schwenkbaren Ringanordnung sein, die nach Einlegen des Filterelements gegen die obere Auflagefläche des Randes gedrückt wird.

Durch die Merkmale des Patentanspruchs 10 wird ein frei hängendes Filterelement geschaffen, das von außen her im Abstand von einer schalenförmigen Ausbildung des Filtergehäuses wärmeisolierend umgeben ist. Dieses Filtergehäuseteil kann vorzugsweise aus durchsichtigem Kunststoff bestehen, damit eine Bedienungsperson den Brüh- und Ablaufvorgang des Filterelements von außen frei beobachten kann, um so das Ende des Filtriervorgangs feststellen zu können. Als besonders vorteilhaft hat sich als Kontur des Filterelements ein Ellipsoid erwiesen, da diese Form ermöglicht, daß das in das Filterelement einfließende heiße Wasser von der Mitte aus radial nach außen gleichmäßig verteilt wird. Hierdurch werden alle Stellen des Kaffeemehls von heißem Wasser möglichst gleichmäßig durchdrungen, um so auch bei geringen Kaffeemehlmengen die optimale Ausnutzung des Kaffeemehls zu erreichen. Als Ellipsoid hat sich eine im wesentlichen halbkugelförmige Außenfläche erwiesen, deren Abtropfbereich einen größeren Radius als der übrige Bereich aufweist und dessen dem Rand näherer Übergangsbereich der Mantelfläche eines Kegelstumpfs folgt. Der weniger stärker abgerundete Abtropfbereich am Filterelement führt zu einer Verkürzung der Abtropfzeit, während der kegelstumpfförmige Übergangsbereich am Filterelement einerseits eine bessere Anlagefläche an dem entsprechend ausgebildeten Bereich des Filterträgers ermöglicht und andererseits die Ausformung von Filterelement und Filterträger in diesem Bereich erleichtert, wenn dieser Bereich oberhalb der Mitte einer Halbkugel verläuft.

Gemäß Anspruch 12 ist der Filterträger aus zwei oder mehreren Teilen zusammengesetzt. Eine derartige Lösung ist dann sinnvoll, wenn die Auflagefläche für das Filterelement Teil eines aus vereinzelten Verstrebungen hergestellten Zwischenteils ist, das sich an dem eigentlichen Filterträger abstützt. Hierdurch ist sowohl das Zwischenteil wie der Filterträger wegen einfacherer Ausformwerkzeuge selbst leichter herstellbar und diese Teile können von Hand leichter und besser gereinigt werden, da sie voneinander trennbar sind. Bei dieser Ausführungsform kann sich die Tragefläche des Filterelements an der Auflagefläche eines Zwischenteils abstützen, das sich wiederum selbst an dem Filterträger abstützt. Das Zwischenteil kann aber auch erst an den Übergangsbereich des Filterelements angehängt oder angeklipst oder sonst wie befestigt werden. Auf alle Fälle bilden bei dieser Anordnung das Zwischenteil und der Filterträger den eigentlichen Filterträger für das Filterelement. Es ist aber auch durchaus denkbar, falls dies aus spritztechnischen Überlegungen heraus notwendig ist, den Filterträger auch aus mehr als zwei Teilen herzustellen und ihn dann zu einem sogenannten "Filter komplett" zusammenzusetzen.

Durch die Merkmale des Patentanspruchs 13 wird in Verbindung mit der erfindungsgemäßen Filtriereinrichtung eine im Haushalt verwendbare Getränkezubereitungsmaschine geschaffen. Dabei wird das in einem Wassertank der Getränkezubereitungsmaschine befindliche Wasser einem Wasserdurchlauferhitzer zugeführt, dort erhitzt und vorzugsweise über ein Steigrohr der Öffnung des Filterelements zugeführt, von wo es auf die Oberfläche des Kaffeemehls oder der Teeblätter fließt und sich im Aufnahmeraum gleichmäßig verteilt. Das extrahierte Getränk fließt dann über die untere Ablaufstelle des Filterelements direkt oder über das Gehäuse des Filterträgers in ein darunter abgestelltes Gefäß. Es ist aber auch durchaus denkbar, die gemäß Patentanspruch 1 definierte Filtriereinrichtung lediglich auf ein Gefäß aufzusetzen, und dann von Hand zu filtrieren.

Nach Anspruch 14 bezieht sich die zweite Erfindung auf das Filterelement selbst, das aus Filterpapier hergestellt ist und seinerseits eine Öffnung und einen Aufnahmeraum zur Befüllung mit Extraktionsgütern wie Kaffeemehl oder Teeblätter aufweist. Dabei ist das Filterelement mit einem Rand ausgebildet, dessen Erstreckungsrichtung vom Aufnahmeraum wegweist, wobei der Rand durch offene Falten verstärkt ist. Dabei weist auch der den Aufnahmeraum begrenzende Bereich Falten auf. Durch die Umkehr einer Talfalte am Übergangsbereich zu einer Bergfalte wird es möglich, diejenigen Falten, die von dem den Aufnahmebereich begrenzenden Übergangsbereich zum Rand hin verlaufen und sich über die Ecke in den Rand des Filterelements weiter erstrecken, fortzuführen, allerdings dann in umgekehrter Form. Wenn also in Draufsicht auf das Filterelement eine mit zugewandten Seitenflächen ausgebildete Falte vom Übergangsbereich zur Ecke verläuft, verläuft sie von der Ecke an zum Rand hin als Falte mit voneinander abgewandten Seitenflächen, d.h., eine Talfalte wird am Rand zu einer Bergfalte. Dabei ist es gleichgültig, ob die Falten wellen- oder zick-zackförmig ausgebildet sind. Der Verlauf der Ecke bildet hierbei immer eine gemeinsame Zick-Zack- oder Wellenlinie sowohl für die Tal- wie für die Bergfalten. Über den Rand läßt sich das Filterelement leicht auf einem entsprechend ausgebildeten Rand aufsetzen und über diesen abstützen. Durch die erfindungsgemäßen offenen Falten wird der Randbereich nicht nur versteift, sondern er wird durch die Materialverstärkung auch reißfester und biegesteifer. Ein derartiges Filterelement läßt sich gut handhaben und ist beim Einsetzen in einen der Form des Filterelements angepaßten Filterträger elastisch genug. Dadurch, daß das Filterelement bereits vor dem Einsetzen seine endgültige Form aufweist, ergibt sich eine einfache Handhabung. Derartige Filterelemente können ineinander gestapelt werden und sind so auf engstem Raum im Haushalt lagerfähig. Auf diese Weise können auch mehrere Filterpapiere aufeinandergelegt in einem Arbeitsgang zu mehreren Filterelementen hergestellt werden.

Die offenen Falten können entweder nur am Rand oder nur am Übergangsbereich oder letztendlich an beiden Teilen ausgebildet sein. Bei der Verwendung der offenen Falten ergibt sich ein besonders flexibles Filterelement, das auch bei größeren Verformungen von außen immer noch in seine Ausgangslage zurückkehrt. Bei dieser Ausführungsform wird ein sehr elastisches und dennoch formstabiles Filterelement im trockenen Zustand geschaffen, das aufgrund der offenen Falten im Durchmesser radial zusammendrückbar ist. Im Brühbetrieb stützt sich das Filterelement trotz seiner Stabilitätsveränderung von trocken auf naß dennoch sicher im Filterträger ab.

Durch die Falten im Aufnahmeraum wird auch dieser Bereich zusätzlich zum Rand durch Papierüberlagerung verstärkt, damit auch die Stabilität des Filterelements in diesem Bereich erhöht wird.

Durch die Merkmale des Patentanspruchs 15 läßt sich ein Halbkugelfilter mit ringförmigern Rand besonders gut formen.

Laufen gemäß den Merkmalen des Anspruchs 16 die Falten in Längsrichtung des Filterelements, wird die höchste Zugfestigkeit im Übergangsbereich und am Rand des Filterelements erreicht. Bei diesem Verlauf bleiben die Falten nahezu unverändert. Der günstigste Verlauf der Falten wird dann erreicht, wenn sie radial nach außen verlaufen (Anspruch 17) und erst mit gewissem Abstand vom Abtropfbereich an der Umfangsfläche des Filterelements beginnen. Dabei nimmt die Tiefe der Falten radial nach außen zu, so daß sie im Randbereich am größten ist. Die Zunahme der Tiefe der Falten kann stetig oder stufenweise erfolgen.

Um die am Filterelement im Bereich des den Aufnahmeraums auftretenden Zugkräfte, die durch das Gewicht sowohl des feuchten Kaffeemehls wie des feuchten Filterpapiers gebildet sind, besser abbauen zu können, ist gemäß den Merkmalen des Patentanspruchs 18 an der Verbindung vom Rand zum Übergangsbereich des Filterelements eine scharfe Ecke bzw. eine scharfe Kante ausgebildet, die im Bereich von 0,2 mm bis 1 mm liegt. Hierdurch wird sichergestellt, daß die Tragefläche an der Auflagefläche aufliegt und sich gleichmäßig dort abstützt. Gemäß Anspruch 19 ist das Filterelement einteilig aus Filterpapier hergestellt und weist 20 bis 60 g, vorzugsweise 35 g pro m² Flächengewicht auf. Dünnere Filterpapiersorten sind kaum möglich, da dann die Belastung des Filterpapiers bei maximalem Füllstand im Brühbetrieb zu hoch wird und es daher leicht zu Rissen im Filterpapier kommen könnte.

Durch die Merkmale des Patentanspruchs 20 wird die Form des den Aufnahmeraum begrenzenden Bereiches des Filterelements festgelegt. Eine derartige ellipsoide Form hat sich als die beste Form beim Filtrieren von Kaffee erwiesen, da alle Bereiche des Kaffeemehls nahezu gleichmäßig von heißem Wasser durchzogen werden. Daher muß dann allerdings aufgrund der erhöhten Abflußgeschwindigkeit der Zulauf von heißem Wasser angepaßt werden.

Um die belastbare Querschnittsfläche des Filterelements dem zum Rand hin zunehmenden Gewicht anzupassen, steigt in Richtung zum Rand hin der Papierquerschnitt an, vorzugsweise im wesentlichen konstant. Dies wird dadurch erreicht, indem die Anzahl der Falten am Umfang des Filterelements in Richtung zum Rand hin zunehmen (Merkmale des Patentanspruchs 21). Diese Zunahme der Belastbarkeit in Richtung zum Rand hin kann zusätzlich noch durch die Merkmale des Patentanspruchs 22 verbessert werden, indem nun auch noch die Tiefe der Falten zum Rand des Filterelements hin zunimmt. Nur so kann man von einer ebenen Papierronde ausgehen.

Gemäß Anspruch 23 dient die Lasche zum einfachen Entnehmen eines Filterelements vom Stapel.

Gemäß einer dritten Erfindung (Anspruch 24) wird ein Verfahren zur Herstellung eines oder mehrerer aus Filterpapier auszuformender Formteile gemäß Anspruch 14 geschaffen, bei dem das Formteil ein Filterelement aus dünnem Filterpapier ist, das seinerseits eine Öffnung und einen Aufnahmeraum zur Befüllung mit Extraktionsgütern, wie Kaffeemehl oder Teeblätter aufweist. Dabei weist das Filterelement einen Rand auf, dessen Erstreckungsrichtung einerseits vom Aufnahmeraum weg weist und durch Faltung verstärkt ist. Dieses Filterelement wird durch Faltung des Filterpapiers beim Einsetzen in die Hohlform ausgeformt, so daß auch hier keine Überbeanspruchungen des Filtermaterials entstehen. Die Form des Filterelements ist also so ausgebildet, daß der dabei entstehende Materialüberschuß in räumliche Bereiche verteilt wird, die durch Falten gebildet werden. Die Oberflächen der Werkzeugteile sind so ausgebildet, daß sie letztendlich das Filterelement in die gewünschte Endform bringen. Dabei verlaufen die Oberflächen der Werkzeuge derart, daß während des Herstellvorgangs eines Filterelements Falten entstehen, die hinterschnittfrei sind, also als offene Falten verlaufen. Dies macht es möglich, daß mehrere Lagen von Filterpapieren in das Werkzeug eingelegt werden können, um so in einem einzigen Arbeitsvorgang eine größere Anzahl von Filterelementen herzustellen. Wie viele Filterpapierlagen eingelegt werden können, hängt von der Dicke des Papiers und der Werkzeugform ab. Durch dieses Verfahren wird es möglich, ein aus dünnem Filterpapier hergestelltes Filterelement einteilig auszuformen. Ein derartiges Verfahren ermöglicht jede beliebige Form eines Filterelements. Dieses Verfahren läßt sich insbesondere bei Filterelementen anwenden, bei denen sich an eine ellipsoide Außenkontur ein ringförmiger Rand radial nach außen anschließt. Zur Herstellung von Filterelementen ist dieses Verfahren äußerst einfach, kostengünstig und zeitsparend.

Damit der Rand des Filterelements eine besonders stabile Endform aufweist, sind die Merkmale des Patentanspruchs 25 vorgesehen. Durch den verfestigten Rand wird das Filterelement selbst formstabiler und läßt sich besser handhaben. Es ist aber auch möglich, das ganze oder auch noch weitere Teile des Filterelements auf diese Weise zu verfestigen.

Durch die zweiteilige Ausführungsform des Niederhalters nach Anspruch 26 übernimmt der äußere Ring die Aufgabe des Gegenhaltens beim Einziehen des Filterpapiers in die Matrize. Dabei kann auch der innere Ring zum Gegenhalten beitragen. Durch die Verwendung von zwei unabhängig voneinander arbeitenden, mit unterschiedlichen Kräften auf das Filterpapier einwirkenden Niederhaltern kann der Einzug des Filterpapiers besser gesteuert werden. So kann die Andrückkraft des inneren Niederhalters gegen das Filterpapier beim Einziehen geringer sein als beim äußeren Niederhalter, damit die beim Einziehen am Übergang vom Rand zum Übergangsbereich erforderlichen Umformkräfte am Filterpapier nicht zu groß werden, was leicht zum Einreißen des Filterpapiers führen könnte. Die Steuerung der Andruckkräfte kann durch Anheben oder Absenken der Niederhalter geregelt werden. Allerdings, sobald der Ausformvorgang am Filterelement beendet ist, trägt der innere Niederhalter zum Gegenpressen gegen das Filterelement bei, während der äußere Niederhalter keine Funktion zur Bearbeitung des Filterpapiers zu übernehmen braucht. Die Niederhalter können auch nur von einem einzigen Niederhalter, der dann alle Aufgaben übernimmt, gebildet sein.

Um ein Verschieben des Filterpapiers im Werkzeug zu vermeiden, damit ein nach dem Ausformvorgang möglichst konzentrisch ausgebildetes Filterelement entsteht, sind die Merkmale des Patentanspruchs 27 vorgesehen.

Gemäß den Merkmalen des Patentanspruchs 28 bestehen die Fixiermittel aus einem aus der Matrize beweglich heraus- bzw. hereinfahrenden Gegenhalter.

Nach den Merkmalen des Patentanspruchs 29 können die Fixiermittel durch Saugkräfte oder Druckkräfte erzeugt werden. Es sind aber auch andere am Filterelement auszubildende Fixiermittel, beispielsweise Vorsprünge oder Vertiefungen, denkbar, die in Zentriervorrichtungen des Werkzeugs eingreifen.

Vorteilhaft haben sich 10 bis 20 kreisförmige Filterpapierscheiben (Anspruch 31) zur Herstellung von Filterelementen in einem einzigen Preßvorgang bewährt (Anspruch 32). Dabei werden alle Scheiben gleichzeitig vom Stempel in die Matrize gedrückt.

Durch die Merkmale des Patentanspruchs 33 wird erreicht, daß die Flankenbereiche der Berg- und Talfalten des Filterelements durch die das Filterelement ausformende Werkzeugform möglichst gezogen werden, damit die Flankenbereiche beim Preßvorgang nicht an den ausformenden Werkzeugwänden anliegen. Hierdurch wird eine unerwünschte zusätzliche Faltenbildung beim Preßvorgang innerhalb der gewollten Falten selbst vermieden, was ein Entnehmen der einzelnen Filterlemente aus dem Filterpaket überhaupt erst ermöglicht.

Mehrere Ausführungsbeispiele der Erfindung sind in der Zeichnung in den Figuren 4-13 dargestellt und werden im folgenden näher erläutert. Es zeigen:
- Fig. 1: Längsschnitt durch ein Filtergehäuse mit eingesetztem Filterelement und Gegenhalter und geschlossenen Falten am Filterelement,
- Fig. 2: Längsschnitt durch das Filterelement nach Fig. 2,
- Fig. 3: perspektivische Ansicht von oben auf einen Abstützring eines Filterträgers, allerdings ohne Filterelement,
- Fig. 4: perspektivische Draufsicht auf ein Ausführungsbeispiel eines Filterelements mit offenen Falten sowohl am Rand wie am Übergangsbereich,
- Fig. 5: Draufsicht auf das Filterelement nach Fig. 4,
- Fig. 6: Längsschnitt gemäß der Schnittführung VIII-VIII nach Fig. 5,
- Fig. 7: Längsschnitt durch ein Ausführungsbeispiel eines Filterträgers mit Abstützring und mit eingehängtem, mit offenen Falten versehenen Filterelement entsprechend der Ausführung nach Fig. 4,
- Fig. 8: perspektivisch seitlich von oben dargestellte Haushaltskaffeemaschine mit dem in Fig. 7 im Längsschnitt dargestellten Filterträger in Schließstellung, allerdings in verkleinertem Maßstab und
- Fig. 9 bis 13: einzelne Verfahrensschritte zur Herstellung des erfindungsgemäßen Filterelements in einem hierfür vorgesehenen Werkzeug mit Matrize, Stempel, Niederhalter, Filterelement und Fixiermittel.

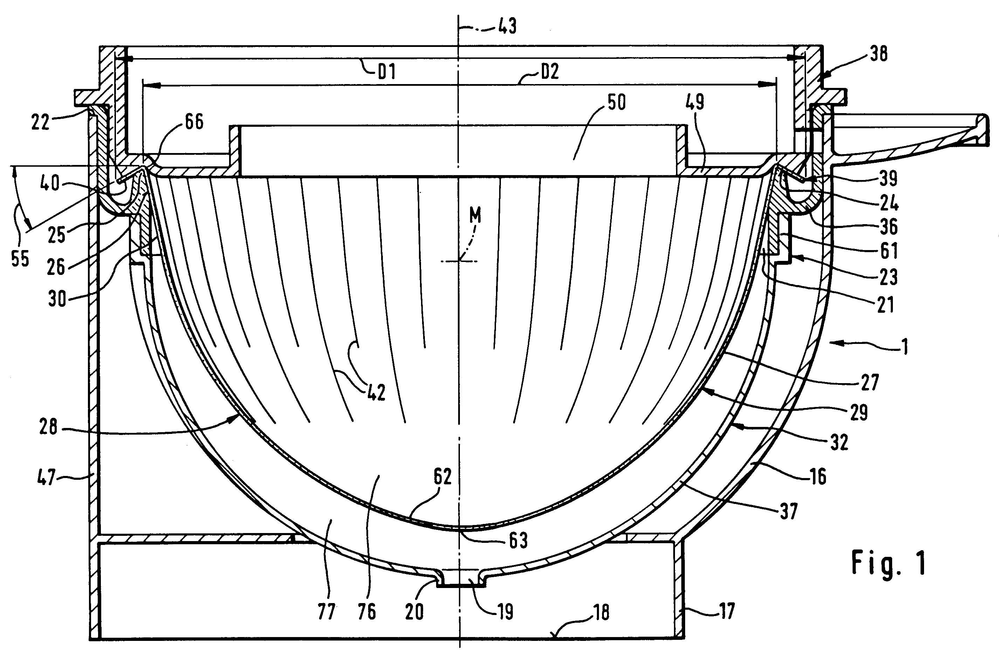

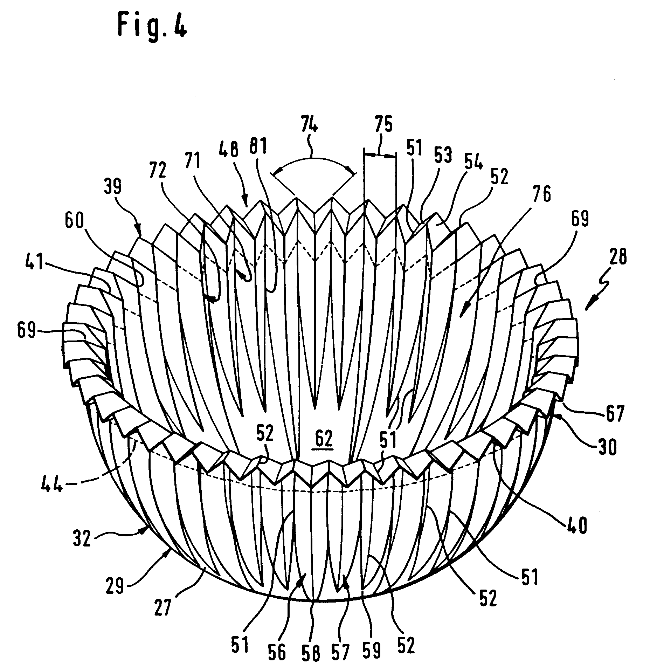

Zunächst sei an dieser Stelle erwähnt, daß die Ausführungsformen nach den Figuren 1 bis 3 nicht erfindungsgemäß sind, sondern lediglich zum besseren Verständnis der Erfindung nach den Figuren 4 bis 13 beitragen sollen.

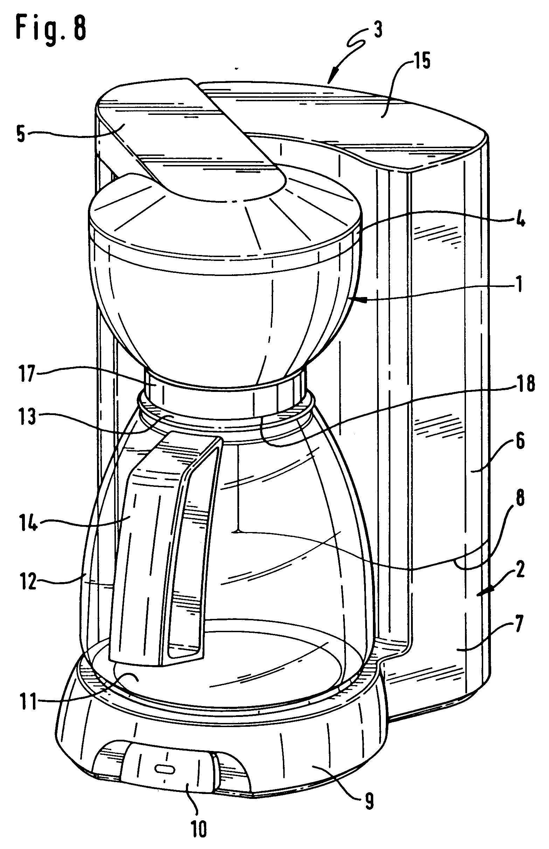

Aus den Figuren 1, 7 und 8 ist ein Filterträger 1 ersichtlich, der nach Fig. 8 in ein Gehäuse 2 einer Kaffeemaschine 3 für den häuslichen Bedarf einsetzbar ist und von diesem getragen wird. Nach Fig. 8 ist oberhalb des Filterträgers ein Brühkopf 4 ausgebildet, der über einen Steg 5 mit dem Gehäuse 2 fest verbunden ist. Seitlich neben dem Steg 5 ist ein Wassertank 6 ausgebildet, der auf einem Sockel 7 des Gehäuses 2 aufsitzt. Der Übergang vom Sockel 7 zum Wassertank 6 wird durch die horizontal verlaufende Trennlinie 8 angezeigt. Von dem Sockel 7 erstreckt sich nach vorne ein tellerförmiger Abstellfuß 9, an dessen Vorderseite eine Schaltwippe oder ein Schaltschieber 10 angeordnet ist, der mit einem im Abstellfuß 9 befestigten, aber hier nicht näher dargestellten elektrischen Schalter verbunden ist. Die Oberseite des Abstellfußes 9 wird von einer Warmhalteplatte 11 begrenzt, auf der ein Gefäß 12, vorzugsweise eine Glaskanne, abgestellt ist. Die Oberseite der Glaskanne 12 endet mit einem auf der Glaskanne 12 aufsitzenden Deckel 13. Am Außenumfang der Glaskanne 12 ist ein Handgriff 14 befestigt, vorzugsweise durch Kleben.

Unterhalb der Warmhalteplatte 11 ist nach Fig. 8 im Abstellfuß 9 ein nicht näher dargestellter elektrischer Durchlauferhitzer ausgebildet, dessen Einlaßrohr über eine nicht näher dargestellte Leitung mit dem Wassertank 6 verbunden ist. Der Auslaß des Durchlauferhitzers ist über ein nicht näher dargestelltes Steigrohr, das auch in dem Steg 5 verläuft, mit dem Brühkopf 4 verbunden. Der Wassertank 6 ist mit einem Deckel 15 verschließbar.

Nach den Figuren 1, 7 und 8 besteht der Filterträger 1 aus einem vorzugsweise aus Kunststoff gespritzten Filtergehäuse 16, das im Querschnitt im wesentlichen halbkugelförmig oder ellipsoid verläuft. Im unteren Bereich ist, konzentrisch zum Filtergehäuse 16 verlaufend, eine rohrförmige Schürze 17 angebracht, die mit ihrer Stirnfläche 18 nach Fig. 8 geringfügig oberhalb der Oberfläche des Deckels 13 endet. Am untersten Punkt des ellipsoiden Filtergehäuses 16 ist nach den Figuren 1 und 7 eine zentrale Auslaßöffnung 19 ausgebildet, die vorzugsweise nach Fig. 1 mit einem Ringbund 20 zum besseren Auslauf der Brühgetränke versehen ist. Die Schürze 17 dient zur besseren Wärmeisolierung des aus der Auslaßöffnung 19 austretenden Brühgetränks. Der Brühkopf 4 verschließt nach Fig. 8 die Öffnung 21 des Filterträgers 1 komplett, um so beim Brühvorgang Wärmeverluste zu vermeiden.

Nach den Figuren 1 und 7 liegt an dem Rand 22 des Filtergehäuses 16 ein Abstützring 23 auf, der zusammen mit dem Filtergehäuse 16 den eigentlichen Filterträger 1 bildet. Der Abstützring 23 kann auch einteilig mit dem Filtergehäuse 16 ausgeformt sein. Allerdings ist es zur besseren Reinigung sinnvoll, Filtergehäuse 16 und Abstützring 23 zweiteilig auszubilden.

Nach den Figuren 1 und 7 weist der Abstützring 23 selbst oder das Ringteil 36 des Abstützringes 23 eine Auflagefläche 24 auf, die nach der Figur 7 im wesentlichen horizontal und radial nach außen, während sie in Fig. 1 im wesentlichen nach außen abfallend, also konisch nach unten, verläuft. Die Auflagefläche 24 bildet an ihrem inneren Rand eine verhältnismäßig scharfe Kante 25 (höchstens sehr kleiner Radius), von der sich nach unten ein Übergangsbereich 26 anschließt. Die Kante 25 ist ebenso wie die Auflagefläche 24 ringförmig ausgebildet. Die Wandung des Übergangsbereichs 26 des Abstützrings 23 ist nach Fig. 7 dem Verlauf des Übergangsbereichs 30 der Außenwandung 27 des Filterelements 28 (Figuren 4 bis 7) angepaßt und stützt sich dort ebenfalls praktisch über die gesamte Fläche ab. Die Übergangsflächen 26, 30 weisen nach den Figuren 7, 4, 5 und 6 eine zick-zack-förmige Struktur auf.

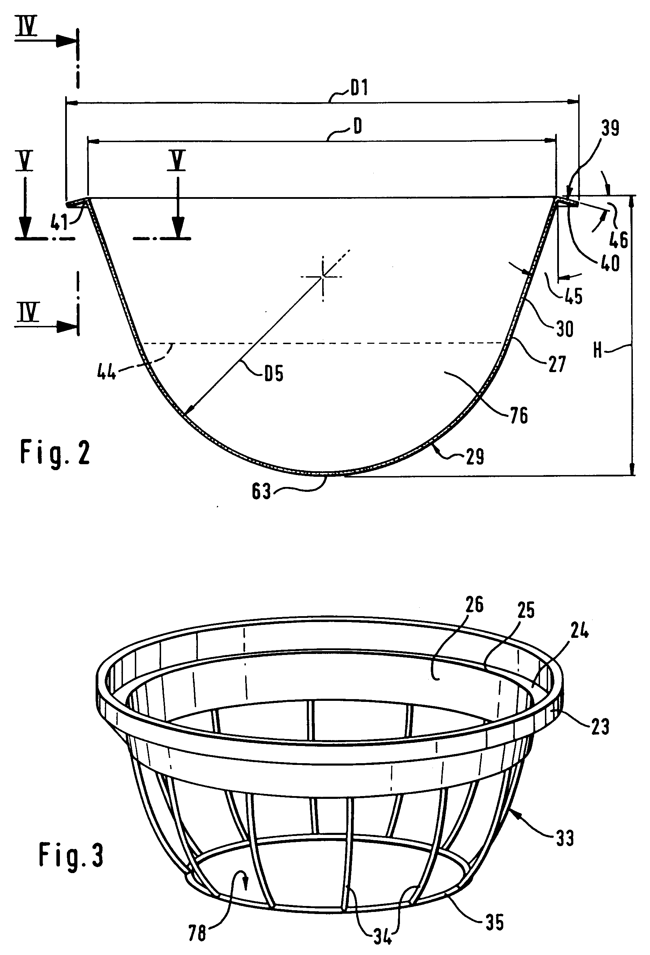

In Fig. 7 besteht der Abstützring 23 aus einem einzigen Formteil, an den sich an den unteren Übergangsbereich der Abstützfläche 26 ein nach unten offener Korb 33 anschließt, wie dies aus Figur 3 hervorgeht. Der Korb 33 besteht aus im Abstand zueinander nach unten verlaufenden Verstrebungen 34, die alle in einem horizontal verlaufenden Abschlußring 35 enden, dessen Öffnung 78 von dem Filterelement 28 nach unten durchdrungen wird (Fig. 7), damit das Filterelement 28 im wesentlichen hängend im Filterträger 1 einsitzt. Die Verstrebungen 34 folgen im wesentlichen der Hüllkurve 29 des Filterelements 28, d.h., im Bereich der Verstrebungen 34 und dem Ring 35 stützt sich das Filterelement 28 nach Fig. 7 sowohl in radialer wie in senkrechter Richtung teilweise ab. Der hauptsächliche Trageanteil wird allerdings vom Rand 39 übernommen. Durch den Korb 33 erhält das Filterelement 1 zusätzlich eine sichere seitliche Lage im Filterträger 1.

Während in Fig. 7 der Abstützring 23 einteilig ausgebildet ist, wird dieser in Fig. 1 von zwei Teilen gebildet, nämlich dem ellipsoid verlaufenden Abschnitt 32, an den sich nach oben ein Ringteil 36 anschließt. Der Abschnitt 32 und das Ringteil 36 können an der Stelle 61 miteinander verklebt, verschweißt, über ein Gewinde, durch eine Verklipsung oder ähnliche Verbindungsmittel miteinander verbunden sein. Der ellipsoid verlaufende Abschnitt 32 wird nach Fig. 1 von einer geschlossenen Wand 37 gebildet, die im Abstand zum Filtergehäuse 16 verläuft. Durch die doppelwandige Ausbildung des Filterträgers 1 wird eine besonders thermogeschützte Filterträgereinheit 1 geschaffen. Der Abstützring 23 ermöglicht nach den Figuren 1 und 7 ein Herausnehmen dieser Einheit ohne Entfernen des Filterträgers 1 von der Kaffeemaschine 3, allerdings ist nach Fig. 1 das Filterelement 28 von dem geschlossenen ellipsoiden Abschnitt 32 besser geschützt als bei der offenen Ausführungsform nach Fig. 7. Nach Fig. 1 stützt sich das Ringteil 36 über den Rand 22 am Filterträger 1 ab.

Nach den Figuren 1 und 7 ist in die Öffnung 21 des Abstützrings 23 des Filterträgers 1 das aus dünnem Filterpapier hergestellte Filterelement 28 eingesetzt, das im wesentlichen der Kontur eines Ellipsoids folgt und an deren freiem Ende sich ein radial nach außen erstreckender Rand 39 anschließt, der vorteilhafterweise von einem Ringbund gebildet wird. Der Rand 39 kann aber auch aus einzelnen Teilabschnitten bestehen. Die an der Unterseite des Randes 39 des Filterelements 28 ausgebildete Tragefläche 40 liegt an der Auflagefläche 24 des Filterträgers 1 praktisch bündig an, falls nicht das Filterelement 28 geringe Deformationen aufgrund seiner verhältnismäßig großen Flexibilität aufweist. Diese können aber nach Einsetzen des Filterelements 28 durch Gegendrücken von Hand in den Boden 62 eliminiert werden. Der hier ringförmig ausgebildete Rand 39 des Filterelements 28 weist - dem Verlauf am Übergang von der Auflagefläche 24 zum Übergangsbereich 26 des Filterträgers 1 angepaßt - eine verhältnismäßig scharfe Ecke 41 auf, damit die Gewichtskräfte des Filterelements 28 besser auf den Rand 39 übertragen werden und so eine stabile Lage des Filterelements 28 im Filterträger 1 auch in nassem Zustand erreicht wird.

Wie aus Figur 2 ersichtlich ist, verläuft das Filterelement 28 im Übergangsbereich 30 kegelstumpfförmig, während es am Übergang von der Trennlinie 44 nach unten im wesentlichen halbkugelförmig verläuft. Der Kegelstumpfwinkel 45 am Übergangsbereich 30 beträgt etwa 15° bei einem Durchmesser D im Bereich der Öffnung von ca. 115 mm. Der Winkel 45 kann auch kleiner als 15° sein. Er muß aber immer größer als 0° sein, um eine Formschräge zu erhalten, durch die das Filterelement 28 überhaupt erst aus dem Formwerkzeug entnommen werden kann. Gleiches gilt bei der Entnahme aus einem Stapel. Die Höhe H des Filterelements 28 beträgt etwa 75 mm. Wie aus Fig. 2 ersichtlich ist, verläuft der Rand 39 nach außen und gleichzeitig nach unten fallend und schließt dabei einen Winkel 46 von etwa 5° ein. Entsprechende Abmessungen in diesen Bereichen gelten ebenfalls für die tiefsten Bereiche 80 der Auflagefläche 24 der V-förmigen Nuten 79 am Filterträger 1 nach den Figuren 1, 3, 7 und 8 sowie für die Filterelemente 28 nach den Figuren 1, 2, 4, 5, 6 und 7. Damit das Filterelement 28 auch immer bündig am Übergangsbereich 26 anliegt, wird der Durchmesser D vorzugsweise einige Millimeter größer gewählt. Beim Einsetzen in den Filterträger 1 wird dabei das Filterelement 28 immer mit radialer Vorspannung zusammengedrückt und rutscht nicht durch.

Nach Fig. 1 ist von oben auf die Öffnung 21 des Filterträgers 1 eine Gegenhaltevorrichtung 38 aufgesetzt, die an der Oberseite des Randes 39 zum Halten des Filterlements 28 mit ihrem Eigengewicht aufliegt und die sich über den Innenrand 66 des Filterelements 28 zentriert. Die Gegenhaltevorrichtung 38 kann aber auch zum Entnehmen und Einsetzen des Filterelements 28 am Filterträger 1 durch geeignete Gelenkmittel (nicht dargestellt), wie Scharniere, schwenkbar sein und kann zum Befestigen des Filterelements 28 durch geeignete Befestigungsmittel, wie Klipse, Schnappverbindungen etc., gegen die Auflagefläche 24 des Filterträgers 1 bzw. Ringteils 36 gedrückt werden. Zur Vermeidung von Wärmeverlusten ist die Gegenhaltevorrichtung 38 mit einer Abdeckung 49 versehen, die zum Einfließen von heißem Wasser eine zentrale Öffnung 50 aufweist. Durch die Gegenhaltevorrichtung 38 wird das Filterelement 28 zwischen ihr und dem Abstützring 23 bzw. dem Filterträger 1 eingespannt.

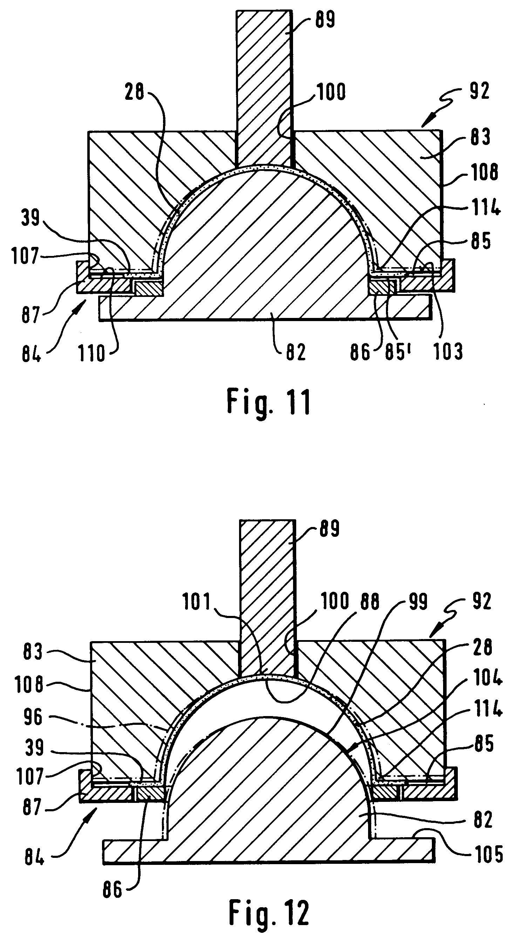

Nach Fig. 1 steht am linken Bereich des Filterträgers 1 eine Wand 47 hervor, die zur Halterung des Filterträgers 1 in der Kaffeemaschine 3 nach Fig. 12 dient. Die Wand 47 geht am Umfang des Filterträgers 1 in die ellipsoide Form über und verläuft dann nach Fig. 1 auf der rechten Seite des Filterträgers 1 nach Fig. 1 ellipsoid.

In den Figuren 4 bis 7 ist ein Filterelement 28 dargestellt, das nach oben (Rand 39) und radial nach außen (Übergangsbereich 30) offene Falten 48 aufweist. Unter offenen Falten 48 ist zu verstehen, daß sie - im Gegensatz zu den überlappenden Falten - sich nicht hinterschneiden, d.h., wenn man senkrecht von oben in den Aufnahmeraum 76 des Filterelements 28 schaut, wie dieses in Fig. 5 dargestellt ist, ist die von oben her sichtbare Oberfläche des Filterpapiers ohne Hinterschneidungen zu sehen.

Die offenen Falten 48 werden nach den Figuren 4 bis 7 von Talfalten 51 und von Bergfalten 52 gebildet. Wie in Fig. 5 zu erkennen ist, sind die Tal- und Bergfalten 51, 52 zum tiefsten Punkt 63 hin ausgerichtet. Jeweils zwei benachbarte Bergfalten 52 bilden mit einer Talfalte 51 eine offene Falte 48, die im Querschnitt in Richtung der Mittelachse 43 vom Beginn nach oben (Fig. 6) V-förmig erweiternd ausgebildet ist und die von den Seitenwänden 53, 54 begrenzt ist. Unter Talfalten 51 sind die Falten zu verstehen, die bei Draufsicht von oben in den Aufnahmeraum 76 als Vertiefungen oder Einschnitte 71 zu erkennen sind. Betrachtet man allerdings diese Einschnitte 71 nach den Figuren 4 und 6 von unten her bzw. von außen und von unten, so stellt sich dieser Einschnitt 71 gerade umgekehrt, also als eine Bergfalte 52 in Form einer satteldachähnlichen Erhebung 72, dar. Sinngemäß gilt dies auch für die satteldachähnlichen Erhebungen 72. Es hängt also immer davon ab, von wo aus man auf das Filterelement 28 schaut, nämlich entweder in den Aufnahmeraum 76 oder von außen auf die Außenwandung 27. Wenn also beim Anmeldungsgegenstand von einer Talfalte 51 oder einer Bergfalte 52 gesprochen wird, dann sind immer die Falten gemeint, die sich beim Draufschauen in dem Aufnahmeraum 76 darstellen.

Wie aus den Figuren 4 und 6 zu erkennen ist, beginnen die Bergfalten 52 von den Punkten 69 als eine Linie, die sich dann an den Punkten 81 zu zwei Falten teilen. Dies deshalb, weil zum tiefsten Punkt 63 hin die Papierverdrängung abnimmt, d.h., die Falten 51 gehen in diesem Bereich in die Außenwandung 27 des ellipsoiden Abschnitts 32 über. Die Bergfalte 52 am Rand 39 wird am Punkt 69 zu einer Talfalte 51 und läuft als solche bis zum Punkt 81.

Wie aus den Figuren 4 und 5 ersichtlich ist, weisen die am Rand 39 ausgebildeten Falten 48 alle die gleiche Geometrie auf, d.h., alle äußeren Spitzen 67 der Talfalten 51 liegen auf einer gemeinsamen horizontalen Ebene, wenn man die Spitzen 67 miteinander verbindet. Da die Talfalten 51 von außen nach innen um den Winkel 55 von ca. 2° fallen, liegen bei Bildung von gedachten konzentrischen Ringen, die einerseits um die Mittelachse 43 geschlagen sind und die andererseits in den Rand 39 fallen, ebenfalls auf horizontalem Niveau. Der Winkel 55 ergibt sich aus der horizontal verlaufenden Bergfalte 52 einerseits und der geometrischen Ausgestaltung der offenen Falten 48 andererseits, wenn man als Ausgangsfilterpapier Kreisscheiben wählt, die dann zu dem in den Figuren 4 bis 6 dargestellten Filterelement 28 gefaltet und verformt werden. Wie aus Fig. 5 zu erkennen ist, beträgt der Außendurchmesser D1 des Randes 39 des ausgeformten, also fertigen Filterelements, etwa 130 mm bei einem Durchmesser D5 der Halbhohlkugel (ellipsoider Abschnitt 32), die von der Hüllkurve 29 begrenzt wird, von etwa 105 mm. Die Hüllkurve 29 ist als eine gedachte Fläche definiert, die sich ergibt, wenn man eine sehr dünne Haut über die Bergfalten 52 und um den tiefsten Punkt 63 herum spannt.

An den halbkugelförmigen Bereich der Außenwandung 27 des Filterelements 28 schließt sich nach den Figuren 4 und 6 nach oben an der Trennlinie 44 ein Übergangsbereich 30 an. Sowohl die Talfalten 51 wie die Bergfalten 52 verlaufen bei diesem Ausführungsbeispiel ab der Trennlinie 44 nach oben mit einem Winkel 45 von etwa 8° leicht konisch nach außen, was aber in der Zeichnung nicht deutlich zu erkennen ist. Diese Schräge 68 dient zum besseren Ausformen des Filterelements 28 nach seiner Formgebung.

Nach den Figuren 4 bis 6 sind, am Umfang gleichmäßig verteilt, am Filterelement 28 längere 56 und kürzere Falten 57 angeordnet, die alle zum tiefsten Punkt 63 hin gerichtet sind. Zwischen den längeren Falten 56 sind jeweils zwei kürzere Falten 57 angeordnet. Die Spitzen 58 der längeren Falten 56 liegen nach Fig. 5 auf einem gemeinsamen Durchmesser D3 von etwa 37 mm. Ebenfalls liegen die Spitzen 59 der kürzeren Falten 57 auf einem gemeinsamen Durchmesser D4, der etwa 76 mm beträgt.

Wie aus den Figuren 4 und 6 zu erkennen ist, wechselt eine am Rand 39 ausgebildete Talfalte 51 an der scharfen Ecke 41 zum Übergangsbereich 30 hin zu einer Bergfalte 52, die sich dann bis zu dem Durchmesser D3 (lange Falte 56) bzw. D4 (kürzere Falte 57) des ellipsoiden Abschnitts 32 nach unten erstreckt. Der Übergang von einer Talfalte 51 zu einer Bergfalte 52 wird durch den Punkt 60 dargestellt, während der Übergang von einer Bergfalte 52 zu einer Talfalte 51 durch den Punkt 69 dargestellt ist. Die Punkte 60 liegen auf einem Durchmesser D von etwa 110 mm, die Punkte 69 liegen hingegen auf einem Durchmesser D2 von 115 mm. Am Rand 39 ragt nach außen eine Lasche 117 hervor, die als Griffelement des Filterelements 28 dient, um so ein Filterelement 28 besser vom Stapel entnehmen zu können.

Um überhaupt an einem ellipsoiden Abschnitt 32 einen radial nach außen gerichteten Rand 39 ohne zusätzliche Mittel und ohne Bildung von sich überlappenden Falten anbringen zu können, ist es nach der Erfindung unbedingt erforderlich, eine vom Übergangsbereich 30 kommende, nach innen zeigende Bergfalte 52 am Punkt 60 zu einer Talfalte 51 umkehren zu lassen, d.h., an der Übergangslinie 70 kehrt sich ein Einschnitt (Rinne) 71 in eine dachförmige Erhebung 72 um. Nur so lassen sich bei einem hohlkugelförmigen Filterelement 28 mit Rand 39 offene Falten 48 darstellen, die von einer konkav verlaufenden Außenwandung 27 in einen radial nach außen verlaufenden Rand 39 übergehen.

Um das Papiermaterial, das zur Formgebung des Filterelements 28, das widerum aus einer Rondenfilterpapierscheibe (nicht dargestellt) mit dem Durchmesser von etwa 225 mm besteht, bei einfacher Herstellung besser verdrängen zu können, sind zwischen zwei längeren Falten 56 zwei kürzere Falten 57 ausgebildet. Selbstverständlich wäre es auch denkbar, anstelle der zwei kürzeren Falten 57 alle Falten gleichlang anzuordnen, allerdings müßte man dann einen anderen Flankenwinkel 73 wählen, um die gleiche Papierverdrängung wie bei der Bildung von zwei Falten 59 zu erreichen. Der Flankenwinkel 73 beträgt in einer kurzen oder längeren Falte 56, 57 etwa 67,5°, dieser ergibt sich allerdings bei der Anzahl der Falten, die gleichmäßig am Umfang des Filterelements 28 bei gegebenen Durchmessern D1 und D2 verteilt sind, von selbst, so wie der Faltenwinkel 74 am Rand 39.

Nach Fig. 6 wachsen die kürzeren und längeren Falten 57, 56 sowohl in ihrer Faltentiefe 74 wie in ihrer Faltenbreite 75 nicht linear an. Linear anwachsende Falten sind von topfförmigen Filterelementen her aus dem Stand der Technik bekannt, bei denen die vom kreisförmigen Boden aufsteigende Seitenwand einen Kegelstumpf bildet. Soll eine ellipsoide oder halbkugelförmige Gestalt des Filterelements 28 hergestellt werden, wie dies nach der Erfindung der Fall ist, so müssen die Falten 48 das Filtermaterial derart wegfalten, daß sich zum einen in der Abwicklung eine Fläche ergibt, zum anderen in der Filtergestalt eine ellipsoide oder halbkugelförmige Form entsteht.

Die Arbeitsweise der erfindungsgemäßen Filtereinheit, die aus einem in einem Filterträger 1 eingesetzten Filterelement 28 besteht, ist nach den Figuren 1, 7 und 8 folgende:

Von einem Stapel von Filterelementen 28 bzw. Filtertüten - unter Stapel sind mehrere ineinander gesteckte Filterelemente 28 zu verstehen, die allerdings in den Zeichnungen nicht dargestellt sind - wird ein einziges Filterelement 28 herausgenommen und in den Filterträger 1 eingesetzt. Gemäß Fig. 8 wird zuvor der Filterträger 1 aus dem Gehäuse 2 der Kaffeemaschine 3 nach vorne herausgezogen oder seitlich weggeschwenkt, so daß die Öffnung 21 des Abstützrings 23 bzw. des Filterträgers 1 von oben her frei zugänglich ist. Anschließend wird das Filterelement 28 über die Öffnung 21 in den Abstützring 23 bzw. in das Filtergehäuse 1 eingesetzt, bis sein Rand 39 bündig an der Auflagefläche 24 aufliegt. Dabei wird die Außenwandung 27 des Filterelements 28 von dem Übergangsbereich 26 des Abstützrings 23 radial nach innen elastisch zusammengedrückt, d.h., dabei liegen die Talfalten 52 immer mit geringer Vorspannung an der Übergangsfläche 26 des Filterträgers 1 bzw. des Abstützrings 23 an, so daß das Filterelement 28 beim Einsetzen nicht durch die Öffnung 21 förmlich so weit durchfällt, bis es letztendlich mit seinem Rand 39 an der Auflagefläche 24 anliegt. Die radiale Einschnürung am Filterelement 28 wird von den nach oben und radial nach außen verlaufenden, V-förmig ausgebildeten Tal- und Bergfalten 51, 52 besonders elastisch aufgenommen, so daß sich das Filterelement 28 sehr leicht mit sehr geringer Kraft in den Filterträger 1 einsetzen läßt.

Liegt das Filterelement 28 beim Einsetzen in den Filterträger 1 mit seinem Rand 39 noch nicht gleichmäßig auf der Auflagefläche 24 an, so kann eine Bedienungsperson nochmals mit der Hand von oben her auf den Boden 62 im Bereich des tiefsten Punktes 63 drücken, um das Filterelement 28 im Filterträger 1 richtig zu zentrieren und um den Rand 39 satt auf der Auflagefläche 24 aufliegen zu lassen; und dies auch insbesondere deshalb, weil die Oberfläche der Auflagefläche 24 und die Oberfläche des Übergangsbereichs 30 die gleiche Kontur wie das Filterelement 28 im Bereich der sich kontaktierenden Flächen aufweisen. Beim Einsetzen des Filterelements 28 nach den Figuren 4 bis 7 dreht sich das Filterelement 28 so lange, bis die Talfalten 51 in die entsprechend angepaßten Nuten 79 und Erhebungen 115 am Abstützring 23 eingreifen und zentriert sind.

Das elastische Verhalten des Filterelements 28 nach Fig. 4 hingegen ist gut, weil hier am Filterelement offene Falten 48 vorhanden sind. Nach Fig. 1 wird nach Einsetzen des Filterelements 28 anschließend noch das Ringteil 36 von oben her auf den Rand 39 des Filterelements gesetzt, um den Rand 39 des Filterelements verhältnismäßig fest gegen die Auflagefläche 24 des Ringteils 36 zu drücken.

Nun wird vorzugsweise Kaffeemehl (nicht dargestellt) eingegeben. Anschließend wird gemäß Fig. 8 der Filterträger 1 in die dort dargestellte Schließposition gebracht, so daß der Brühkopf 4 von oben her die Öffnung 21 verschließt und die vom Durchlauferhitzer kommende Leitung (nicht dargestellt) sich oberhalb der Öffnung 21 des Filterelements 28 befindet. Wird nun heißes Wasser von Hand auf das Kaffeemehl gegossen oder gemäß Fig. 8 durch Inbetriebnahme des Durchlauferhitzers (nicht dargestellt) mittels des Schalters 10 heißes Wasser über den Steg 5 und den Brühkopf 4 in die Öffnung 21 eingebracht, so dringt dieses in das Kaffeemehl ein und extrahiert Extraktionsstoffe aus dem Extraktionsgut. Das so hergestellte Brühgetränk fließt aufgrund des nahezu gleichen Abstandes von der Mitte M (das ist etwa der Bereich einerseits, der sich ergibt, wenn Wasser einläuft und sich ein mittlerer Flüssigkeitsspiegel bei mittlerem bis vollem Füllungsgrad von Kaffeemehl einstellt und andererseits der Bereich des Filterelements 28, von dem aus der radiale Abstand zur Wandung des Filterelements 28 etwa gleich ist) bis zur Außenwandung 27 des Filterelements 28 das Brühgetränk gleichmäßig an der Außenwandung 27 frei ab, ohne nennenswert von Teilen des Filterträgers 1 am Abfließen gehindert zu werden.

Aufgrund der Kapillarwirkung wandert auch Feuchtigkeit bis zum Rand 39 des Filterelements 28, die eine Flüssigkeitsschicht zwischen der Tragefläche 40 und der Auflagefläche 24 bildet. Diese dünne Wasserschicht trägt dazu bei, daß das nun sehr weich gewordene Filterpapier des Filterelements 28 mit seinem Rand 39 auf der Auflagefläche 24 und insbesondere auch am Übergangsbereich 26 festgehalten und somit durch diesen Effekt besser getragen wird. Obwohl also das Filterelement, sobald es durchnäßt ist, seine Steifigkeit nahezu völlig verliert, bleibt dennoch im wesentlichen die Halbkugelform erhalten und das Filterelement 28 fällt nicht radial zusammen, was nach den Figuren 1 und 7 ein Absinken des Filterelements 28 nach unten in den Aufnahmeraum 77 des Filtergehäuses 16 zur Folge hätte.

Gemäß dem Ausführungsbeispiel nach Fig. 7 sorgen auch die Verstrebungen 34 des Korbes 33 zusätzlich noch für eine noch bessere Lage des Filterelements 28 im Filterträger 1. Dabei dienen die Verstrebungen 34 dazu, einerseits das Filterelement 28 radial zu halten, andererseits dieses auch aufgrund seines Eigengewichts gegen Herausfallen aus der Öffnung 78 des Ringteils 36 zu sichern. Eine Abstützung des Filterelements 28 alleine über den Rand 39 reicht allerdings bereits völlig aus.

An dieser Stelle sei noch erwähnt, daß, wie dies aus Fig. 7 hervorgeht, auch der Übergangsbereich 26 des Abstützrings 23 wie die Auflagefläche 24 so ausgebildet sind, daß sie der Außenkontur des Filterelements 28 folgen, also mit V-förmig verlaufenden Nuten 79 und Erhebungen 115 versehen sind, in die Talfalten 51 des Filterelements eingreifen. In den Wandflächen der Nuten 79 bzw. Erhebungen 115 liegen die Seitenwände 53, 54 an und werden infolge der auftretenden Adhäsion an diesen Seitenwänden 53, 54 gehalten.

Das Brühgetränk fließt nach den Figuren 1 und 7 an der Außenwandung 27 des Filterelements 28 nahezu gleichmäßig ab, nachdem die Extraktionsstoffe aus dem Extraktionsgut aus allen Bereichen gleichmäßig extrahiert wurden. Sobald das Brühgetränk den tiefesten Punkt 63 des Filterelements 28 erreicht hat, trennt es sich vom Filterelement 28 und fließt in den Aufnahmeraum 77 ein, von wo es über die Öffnung 19 den Filterträger 1 verläßt und in eine darunter abgestellte Glaskanne 12 abfließt. Sobald der Extraktionsvorgang beendet ist und das Extraktionsgut aus dem Filterelement 28 abgeflossen ist, ist der Brühvorgang beendet. Durch die ellipsoide Form des Filterelements 28 wird auch ein langes Nachtropfen vermieden, so daß bereits nach ca. 4 Ablauftropfen das Nachtropfen beendet ist.

Nun kann der Filterträger 1 nach den Figuren 1 und 7 wieder aus dem Gehäuse 2 herausgenommen werden und durch Umkippen des Filterträgers 1 kann das Filterelement 28 mit samt dem Kaffeekuchen (nicht dargestellt) ausgeworfen werden. Es ist aber auch denkbar, nur den Abstützring 23 mit dem einsitzenden Filterelement 28 mittels einer am Abstützring 23 ausgebildeten, aber in der Zeichnung nicht dargestellten Handhabe herauszunehmen und durch Umkippen das Filterelement 28 zu entfernen (Fig. 7). Nach Fig. 1 muß zuvor die Gegenhaltevorrichtung 38 nach oben geklappt oder sonstwie vom Ringteil 36 bzw. vom Filterträger 1 entfernt werden.

Durch das erfindungsgemäße Filterelement 28, das aus sehr dünnem Filterpapier, vorzugsweise mit einer Papierdicke von nur 0,1 mm, besteht, wird erstmals auch im nassen Zustand eine recht stabile Filterpapierform geschaffen, bei der ohne aufwendige Haltemittel das Filterelement 28 selbst im Filterträger 1 gehalten wird. Die stabile Filterpapierform ermöglicht eine einfache Handhabung und läßt aufgrund der ellipsoiden Form ausgezeichnete Brühergebnisse zu. Insbesondere kann bei diesem Filterelement 28 das Brühgetränk nahezu ungehindert an der Außenfläche abfließen, was die Verweildauer des heißen Wassers im Filterelement 28 reduziert und so ein Einbringen von nicht erwünschten Geschmacks- bzw. Aromastoffen einerseits und ein zu schnelles Abkühlen des Brühgetränks andererseits vermeidet.

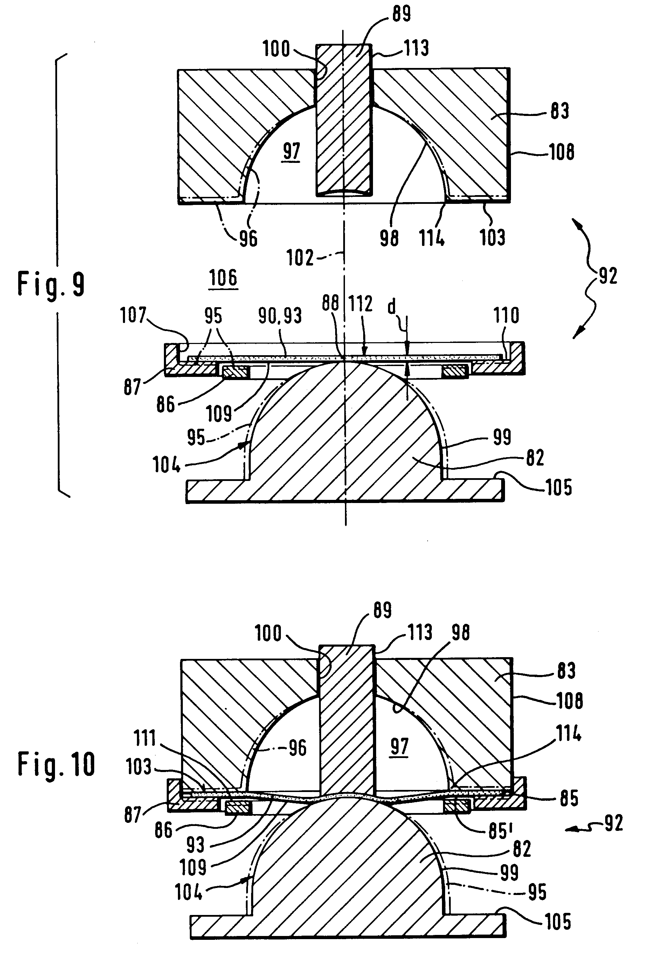

Aus den Figuren 9 bis 13 sind die einzelnen Verfahrensschritte zum Herstellen eines oder mehrerer Filterelemente 28 (Fig. 1 bis 7) mit Hilfe eines Werkzeuges 92 dargestellt. Das Werkzeug 92 besteht dabei aus einem Stempel 82, einer Matrize 83, einem Niederhalter 84 und einem Gegenhalter 89 als Fixiermittel. Die Matrize 83 weist einen ellipsoiden Hohlraum 97 auf, dessen Innenwand entweder glatt oder mit keilförmigen Einschnitten 96 versehen ist. Bei der mit keilförmigen Einschnitten 96 versehenen Innenwand 98 wird ein nach den Figuren 4 bis 7 dargestelltes Filterelement 28 hergestellt. Dabei muß dann selbstverständlich auch die Oberfläche des Stempels 82 mit keilförmigen Erhebungen 95 (Filterelement 28 nach den Figuren 4 bis 7) versehen sein, die dann in die entsprechenden keilförmigen Einschnitte 96 in der Matrize 83 eingreifen können.

Nach den Figuren 9 bis 13 ist an der Matrize 83 im Zentrum eine Bohrung 100 ausgebildet, die von dem als Fixiermittel ausgebildeten Gegenhalter 89 durchdrungen wird. Nach den Figuren 11 und 12 bildet die Innenfläche 101 am Gegenhalter 89 mit der Innenwandung 98 der Matrize 83 eine ellipsoide geschlossene Hohlform 97, und dies wenn beispielsweise das Filterelement 28 bereits vollständig ausgeformt ist oder die Matrize 83 mit samt dem Gegenhalter 89 wieder nach oben fährt oder gefahren ist (Fig. 12). Auch die Innenfläche 101 des Gegenhalters 89 ist entweder glatt oder mit keilförmigen Einschnitten 96 versehen, die in die Erhebungen 95 des Stempels 82 eingreifen. Die Matrize 83 ist gegenüber dem Gegenhalter 89 in Längsrichtung der Mittelachse 102 verschiebbar. Ebenso ist der Gegenhalter 89 gegenüber der Matrize 83 in Richtung der Mittelachse 102 höhenverschiebbar. Auch können sowohl Gegenhalter 89 wie Matrize 83 gleichzeitig auf- bzw. abbewegt werden. Gemäß Fig. 9 schließt sich an das Ende der Innenwand 98 eine Ringfläche 103 an, die ebenfalls mit den V-förmig ausgebildeten Einschnitten 96 versehen ist und die senkrecht zur Mittelachse 102 verlaufen.

Nach den Figuren 9 bis 13 ist senkrecht unterhalb der Matrize 83 und dem Gegenhalter 89 der Stempel 82 ausgebildet, der im wesentlichen aus einer ellipsoiden Halbkugel 104 besteht, die mittig zur Mittelachse 102 verläuft. An der Oberfläche der ellipsoiden Halbkugel 104 sind keilförmige Erhebungen 95 ausgebildet, die so verlaufen, daß sie in zusammengefahrenem Zustand von Stempel 82 und Matrize 83 die Einschnitte 71 in den Figuren 8 bis 10 des Filterelements 28 auf der einen Seite oder die Einschnitte 96 der Matrize 83 auf der anderen Seite ausfüllen. Am unteren Ende des Stempels 82 schließt sich radial nach außen eine ringförmig ausgebildete Schulter 105 an, die als Preßvorrichtung gegen den Niederhalter 84 dient.

An dieser Stelle sei noch bemerkt, daß das Werkzeug 92 nach den Figuren 9 bis 13 ohne die zugehörigen Betätigungs- und Führungseinrichtungen sowie die Steuerelemente dargestellt ist, um den eigentlichen Formvorgang besser darstellen zu können.

Die Arbeitsweise des erfindungsgemäßen Werkzeugs 92 ist folgende:

In Fig. 9 ist das Werkzeug 92 ausgefahren, d.h., die Matrize 83 mit Gegenhalter 89 verlaufen im Abstand oberhalb des Stempels 82, so daß zwischen Stempel 82 und Matrize 83 mit Gegenhalter 89 ein Freiraum 106 entsteht, der es ermöglicht, eine Papierronde 93 oder einen Stapel 112 aus mehreren Papierronden 93 von der Seite her mittels einer nicht dargestellten Greifvorrichtung auf die Oberseite des äußeren Ringes 87 des Niederhalters 84 zu legen. Im Ausführungsbeispiel soll die Dicke d mehrere übereinanderliegende Papierronden 93 darstellen.

Wie aus den Figuren zu erkennen ist, weist der äußere Ring 87 des Niederhalters 84 an seinem radial äußeren Ende eine nach oben verlaufende hohlzylindrische Wand 107 auf, die, wenn der äußere Ring 87 gegen die Matrize 83 gepreßt wird, sich an der Außenwand 108 der Matrize 83 zentriert. Wie aus den Figuren 9 bis 13 zu erkennen ist, liegt die Unterseite 109 der untersten Papierronde 93 an der Oberseite 103 des äußeren Rings 87 an, während die Oberseite 111 des inneren Rings 86 geringfügig unterhalb der Oberseite 110 des äußeren Rings 87 verläuft, d.h., zwischen dem inneren Ring 86 und der Unterseite 109 der letzten Papierronde 93 ist ein geringer Spalt 85 ausgebildet. Dieser Spalt 85 kann auch verschwindend klein sein, es soll hiermit nur angedeutet werden, daß beim Einzug des Filterpapiers 90 der innere Ring 86 dieses Filterpapierpakets 112 nicht behindert.

Im nächsten Arbeitsschritt nähern sich die Matrize 83 und der Gegenhalter 89 gegenüber dem Stempel 82 und dem Niederhalter 84, wobei es gleichgültig ist, ob sich nur die Matrize 83 mit dem Gegenhalter 89 oder nur der Stempel 82 oder sich alle Teile zueinander bewegen. Die Matrize 83 fährt so lange gegen den äußeren Ring 87 des Niederhalters 84, bis die keilförmigen Erhebungen 95 am äußeren Ring 87 in die keilförmigen Einschnitte 96 an der Matrize 83 leicht eingreifen. Dabei wird der äußere Bereich der Papierronden 93 in leicht V-förmige Einschnitte 71 und dachförmige Erhebungen 72 vorgeformt. Anschließend fährt der Gegenhalter 89 gegen die Oberfläche des Filterpapierpakets 112 und drückt dabei die Unterseite 109 der letzten unteren Papierrronde 93, also das ganze Filterpapierpaket 112, mit Vorspannung gegen die Oberfläche 99 des Stempels 82. Auf diese Weise werden die Papierronden 93 gegenüber dem Werkzeug 92, wie dies aus Fig. 10 hervorgeht, fixiert und zentriert.

Nun fährt entweder die Matrize 83 mit dem Niederhalter 84 gegen den Stempel 82 oder der Stempel 82 in den ellipsoiden Hohlraum 97 der Matrize 83 ein. Während bei der ersten Variante der Gegenhalter 89 bei dieser Verschiebung fest steht und die Matrize 83 mit ihrer Bohrung 100 nach Fig. 10 an der Außenfläche 113 des Gegenhalters 89 entlanggleitet, gleitet bei der zweiten Variante die Außenfläche 113 an der Bohrung 100 der Matrize 83 entlang. Während sich also der Stempel 82 in den ellipsoiden Hohlraum 97 hineinbewegt, legt sich das Filterpapierpaket 112 an der Oberfläche 99 des Stempels 82 an, indem dabei der vom äußeren Ring 87 gegen die Ringfläche 110 der Matrize 83 leicht angedrückte Bereich des Filterpapierpakets 112 radial nach innen gleitet und in das Filterelement 28 die Talfalten 51 und Bergfalten 52 gemäß den Figuren 4 bis 6 durch die Matrize 83 und den Niederhalter 84 eingebracht werden. Dabei drückt der äußere Ring 87 nur gerade so fest gegen das Filterpapierpaket 112, daß dieses immer eine ausreichende Spannung zur Bildung der Falten 51, 52 hat und gleichzeitig dennoch der radial äußere Rand des Filterpapierpakets 112 aus dem Spalt 85 nach innen weggleitet.

Bei dem letzten Arbeitsgang liegt der innere Ring 86 nur leicht an der Unterseite 109 des Filterpapierpakets 112 an. Je weiter der Stempel 82 in den Hohlraum 97 der Matrize 83 einfährt, um so mehr wird das Filterpapierpaket 112 am Eckbereich 114 der Matrize 83 umgelenkt und in die keilförmigen Einschnitte 96 eingedrückt. Das Filterpapierpaket 112 wird also erfindungsgemäß förmlich über den Eckbereich 114 gezogen, wobei gleichzeitig die Talfalten 51 und Bergfalten 52 nach den Figuren 4 bis 6 durch die Matrize 83 und den Niederhalter 84 eingeformt werden. Dieser Vorgang verläuft so lange, bis die in Fig. 11 dargestellte Position erreicht ist, d.h., der Stempel 82 ist nun vollständig in den Hohlraum 97 eingefahren. Während die keilförmigen Erhebungen 95 in die keilförmigen Einschnitte 96 eingreifen, wird das Filterpapierpaket 112 in seine endgültige Form, auch an dem inneren Bereich, der nicht über den Eckbereich 114 gleitet, gepreßt.

Nun wird der Stempel 82 so fest gegen die Matrize 83 und den Gegenhalter 89 gepreßt, daß das Filterpapierpaket 112 seine endgültige Form gemäß den Figuren 4 bis 6 erhält. Bei diesem Preßvorgang werden nur die Tal- bzw. Bergfalten 51, 52 verpreßt, nicht aber die Seitenwände 53, 54 nach Fig. 6. Dies wird durch die entsprechende Ausbildung der Einschnitte 96 und Erhebungen 95 im Werkzeug 92 erreicht. Gleichzeitig drückt nun auch der innere Ring 86 gegen den Rand 39 des Filterpapierpakets 112, daß einerseits der Spalt 85 verschwindet und andererseits die Ränder 39 des Filterpapierpakets 112 fest gegeneinander gepreßt werden, um eine stabile Form von vielen Filterelementen 28 im Filterpapierpaket 112 zu erreichen. Der Formvorgang ist nach einer vorgegebenen Haltezeit beendet.

Nach Figur 12 fährt nun die Matrize 83 mit Gegenhalter 89 nach oben aus dem Stempel 82 heraus, wobei allerdings der innere Ring 86 noch fest gegen den Rand 39 drückt. Nun entfernt sich auch der Niederhalter 84 von der Matrize 83, so daß das Filterpapierpaket 112 nur noch durch seine radiale Vorspannung, die gegen die Innenwand 98 der Matrize 83 wirkt, in der Matrize 83 gehalten wird. Es ist aber auch möglich, falls die Vorspannung zu gering ist und ein Herausfallen des Filterpapierpakets 112 aus dem Hohlraum möglich wäre, eine Saugeinrichtung (nicht dargestellt) am Gegenhalter 89 anzubringen, durch die das Filterpapierpaket 112 am Gegenhalter 89 fest anliegt.

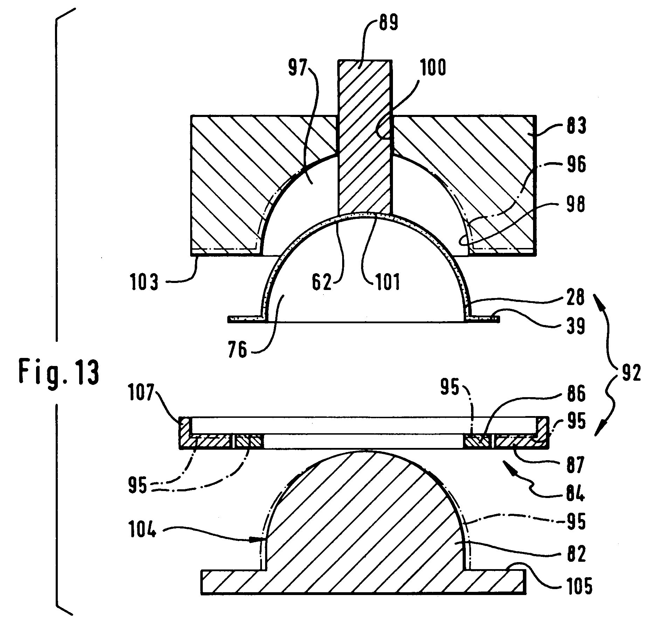

In der Ausführungsform des Werkzeugs 92 nach Fig. 13 soll das Filterpapierpaket durch eine im Gegenhalter 89 ausgebildete Vakuumeinrichtung (nicht dargestellt) gehalten werden. Es ist aber auch denkbar, durch eine Gegendrückeinrichtung (nicht dargestellt), die in den Aufnahmeraum 76 eingreift und gleichzeitig den Boden 62 gegen die Innenfläche 101 des Gegenhalters 89 drückt, das Filterpapierpaket 112 am Gegenhalter 89 zu halten. Anschließend kann durch Hereinfahren des Gegenhalters 89 in die Matrize 83 (Fig. 13) das fertig hergestellte Filterpapierpaket 112 aus dem Werkzeug 92 entnommen und in eine dem Filterpapierpaket 112 angepaßte Verpackung eingesetzt werden. Der sehr einfache Herstellvorgang von einem oder mehreren Filterelementen 28 ist damit beendet.

## Patentansprüche

1. Filtriervorrichtung zum Herstellen von Brühgetränken, mit einem Filterträger (1) und einem Filterelement (28) aus Filterpapier, welches seinerseits einen Aufnahmeraum (76) zur Befüllung mit Extraktionsgütern, wie Kaffeemehl oder Teeblätter, aufweist, die nach ihrer Kontaktierung mit heißem Wasser an dieses Extraktionsstoffe abgeben, so daß aus dem Filterelement (28) ein Brühgetränk abfließt, wobei das Filterelement (28) durch Haltemittel (39, 24) getragen wird, die aus einem am Filterelement (28) ausgebildeten Rand (39) mit einer Tragefläche (40) und einer am Filterträger (1) ausgebildeten Auflagefläche (24) bestehen, wobei die Erstreckungsrichtung des Randes (39) vom Aufnahmeraum (76) des Filterelements (28) nach außen wegweist, wobei die Tragefläche (40) des Randes (39) sich nach Einlegen des Filterelements (28) an der am Filterträger (1) ausgebildeten Auflagefläche (24) abstützt und wobei der Rand (39) des Filterelements (28) durch Falten (51, 52) des Filterpapiers mechanisch verstärkt ist,
**dadurch gekennzeichnet**,
daß die Falten (51, 52) als offene Falten ausgebildet sind, so daß keine Überlappungen von Papierflächen auftreten, daß auch der den Aufnahmeraum (76) begrenzende Bereich Falten (51, 52) aufweist, daß die Falten (51, 52) am Rand (39) und am Aufnahmeraum (76) in ihrem Querschnitt eine zick-zack- oder wellenförmige Struktur aufweisen und sich daher in Umfangsrichtung des Filterelements (28) jeweils an eine Bergfalte (52) eine Talfalte (51) anschließt, daß in radialer Richtung des Filterelements (28) am Übergang vom Übergangsbereich (30) zum Rand (39) hin eine Umkehrung von einer Bergfalte (52) in eine Talfalte (51) und umgekehrt stattfindet, daß auch die Auflagefläche (24) des Filterträgers (1) auf dem Verlauf ihres Umfangs eine zick-zack- oder wellenförmige Struktur aufweist und sich daher in Umfangsrichtung des Filterträgers (1) an eine Erhebung (115) eine Vertiefung (79) anschließt, mit denen die Bergfalten (52) und die Talfalten (51) des Randes (39) des Filterelements (28) zusammenwirken.

2. Filtriervorrichtung nach Anspruch 1,
**dadurch gekennzeichnet**,
daß der Rand (39) am offenen Ende des Aufnahmeraums (76) des Filterelements (28) ausgebildet ist.

3. Filtriervorrichtung nach Anspruch 1,
**dadurch gekennzeichnet**,
daß auch die Falten (51, 52) an dem den Aufnahmeraum (76) begrenzenden Bereich des Filterelements (28) als offene Falten ausgebildet sind, wodurch auch auf dem den Aufnahmeraum (76) begrenzenden Bereich des Filterelements (28) Vertiefungen (71) und Erhebungen (72) entstehen, daß sich an die Auflagefläche (24) des Filterträgers (1) ein Übergangsbereich (26) anschließt, dessen Kontur der Kontur des den Aufnahmeraum (76) begrenzenden Bereich (30) des Filterelements (28) folgt, daß auch der Übergangsbereich (26) auf dem Verlauf seines Umfangs entsprechende Erhebungen (115) und Vertiefungen (79) aufweist, mit denen die Vertiefungen (71) und Erhebungen (72) des Filterelements (28) zusammenwirken.

4. Filtriervorrichtung nach Anspruch 1,
**dadurch gekennzeichnet**,
daß sich an die Auflageflächen (24) des Filterträgers (1) ein aus vereinzelten Verstrebungen (34) gebildeter und nach oben offener Korb (33) anschließt, der das Filterelement (28) aufnehmen kann.

5. Filtriervorrichtung nach Anspruch 4,
**dadurch gekennzeichnet**,
daß die Verstrebungen (34) im wesentlichen nur oberhalb der maximalen Füllstandshöhe für Extraktionsgüter am Korb (33) ausgebildet sind.

6. Filtriervorrichtung nach Anspruch 1,
**dadurch gekennzeichnet**,
daß im Brühbetrieb zwischen den Haltemitteln (39, 40, 24) von Filterelement (28) und Filterträger (1) eine Wasserschicht eindringt und daß die Wasserschicht zwischen Filterelement (28) und Filterträger (1) eine Adhäsionswirkung erzeugt, die zur Halterung des Filterelements (28) am Filterträger (1) beiträgt.

7. Filtriervorrichtung nach Anspruch 6,
**dadurch gekennzeichnet**,
daß infolge von Kapillarwirkung Flüssigkeit im Filterpapier zu den Haltemitteln (39, 40) geleitet wird.

8. Filtriervorrichtung nach Anspruch 1,
**dadurch gekennzeichnet**,
daß der Winkel (55) zwischen der Auflagefläche (24) des Filterträgers (1) und der vertikalen Achse (43) der Filtriervorrichtung kleiner gleich 90° ist.

9. Filtriervorrichtung nach Anspruch 1,
**dadurch gekennzeichnet**,
daß der Rand (39) des Filterelements (28) zusätzlich durch eine gegen den Rand (39) des Filterelements (28) wirkende Gegenhaltevorrichtung (38) gegen die Auflagefläche (24) am Filterträger (1) gedrückt wird.

10. Filtriervorrichtung nach Anspruch 1,
**dadurch gekennzeichnet**,
daß der Filterträger (1) ein Filtergehäuse (16) aufweist, das das Filterelement (28) umgibt, daß die Außenkontur (29) des Aufnahmebereichs (76) des Filterelements (28) und des Filtergehäuses (16) jeweils der Kontur eines Ellipsoid folgen und daß bei eingehängtem Filterelement (28) dieses stets mit Abstand zum Filtergehäuse (16) verläuft.

11. Filtriervorrichtung nach Anspruch 10,
**dadurch gekennzeichnet**,
daß die Außenkontur (29) des Aufnahmebereichs (76) des Filterelements (28) und des Filtergehäuses (16) halbkugelförmig ausgebildet ist.

12. Filtriervorrichtung nach Anspruch 1,
**dadurch gekennzeichnet**,
daß der Filterträger (1) aus zwei oder mehreren Teilen (32, 36) zusammengsetzt ist.

13. Filtriervorrichtung nach Anspruch 1,
**dadurch gekennzeichnet**,
daß die Filtriervorrichtung Teil einer elektrisch betriebenen Getränkezubereitungsmaschine (3) für den häuslichen Bedarf ist, in der Wasser in einem elektrischen Wassererhitzer erhitzt, welches dann seinerseits einem oberhalb der Filtriervorrichtung (1, 28) ausgebildeten Perkolator zugeführt wird, von wo es dann auf das Extraktionsgut fließt, dort Extraktionsstoffe aus dem Extraktionsgut extrahiert und als Brühgetränk abfließt.

14. Filterelement (28) aus Filterpapier, das seinerseits eine Öffnung und einen Aufnahmeraum (76) zur Befüllung mit Extraktionsgütern, wie Kaffeemehl oder Teeblätter, aufweist, das weiterhin mit einem Rand (39) versehen ist, dessen Erstreckungsrichtung vom Aufnahmeraum (76) wegweist, wobei der Rand (39) durch Falten (51, 52) verstärkt ist,
**dadurch gekennzeichnet**,
daß die Falten (51, 52) als offene Falten ausgebildet sind, so daß keine Überlappungen von Papierflächen auftreten, daß auch der den Aufnahmeraum (76) begrenzende Bereich, bedingt durch seine Herstellung durch Umformen aus Filterpapier, Falten (51, 52) aufweist, daß die Falten (51, 52) am Rand (39) und am Aufnahmeraum (76) in ihrem Querschnitt eine zick-zack- oder wellenförmige Struktur aufweisen und sich daher in Umfangsrichtung des Filterelements (28) jeweils an eine Bergfalte (52) eine Talfalte (51) anschließt, und daß in radialer Richtung des Filterelements (28) am Übergang vom Übergangsbereich (30) zum Rand (39) hin eine Umkehrung von einer Bergfalte (52) in eine Talfalte (51) und umgekehrt stattfindet.

15. Filterelement nach Anspruch 14,
**dadurch gekennzeichnet**,
daß das Filterpapier aus einer ringförmigen Filterpapierscheibe besteht.

16. Filterelement nach Anspruch 14,
**dadurch gekennzeichnet**,
daß sich die Falten (51, 52) in Längsrichtung des Filterelements (28) vom Bereich des Bodens (62) bis in den Rand (39) erstrecken.

17. Filterelement nach Anspruch 14,
**dadurch gekennzeichnet**,
daß sich die Falten (51, 52) radial nach außen erstrecken.

18. Filterelement nach Anspruch 14,
**dadurch gekennzeichnet**,
daß am Übergang vom Rand (39) zum Übergangsbereich (30) am Filterelement (28) eine scharfe Ecke (41) ausgebildet ist.

19. Filterelement nach Anspruch 14,
**dadurch gekennzeichnet**,
daß das Filterelement (28) einteilig aus Filterpapier hergestellt ist und daß das Filterpapier 20 bis 60 Gramm, vorzugsweise 35 Gramm, pro Quadratmeter Flächengewicht hat.

20. Filterelement nach Anspruch 14,
**dadurch gekennzeichnet**,
daß die Außenkontur (32) des Aufnahmeraums (76) des Filterelements (28) innerhalb des Raumes liegt, der durch die Außenflächen zweier Ellipsoide gebildet wird und daß der jeweils kürzeste Abstand der beiden Außenflächen an keiner Stelle des so definierten Raumes größer als 8 mm ist.

21. Filterelement nach Anspruch 14,
**dadurch gekennzeichnet**,
daß die Falten (51, 52) an dem den Aufnahmeraum (76) begrenzenden Bereich des Filterelements (28) auf unterschiedlichen Höhen beginnen, vorzugsweise wechseln sich zwei kürzere Falten (57) mit einer längeren Falte (56) ab.

22. Filterelement nach Anspruch 14,
**dadurch gekennzeichnet**,
daß die Tiefe (t) der Falten (51, 52) von ihrem Beginn (Spitzen 58, 59) radial nach außen zunimmt.

23. Filterelement nach Anspruch 14,
**dadurch gekennzeichnet**,
daß am Rand (39) eine oder mehrere Laschen (117) als Handhabungshilfe ausgebildet sind.

24. Verfahren zur Herstellung eines oder mehrerer aus Filterpapier (90) auszuformender Filterelemente (28) nach Anspruch 14, bei dem das Werkzeug (92) zur Herstellung eines oder mehrerer Filterelemente (28) aus einem Stempel (82), einem Niederhalter (84) und einer Matrize (83) besteht, bei dem weiterhin ein oder mehrere Filterpapiere (90) zwischen Niederhalter (84) und Matrize (83) eingebracht wird, bei dem anschließend Niederhalter (84) und Matrize (83) zur Bildung eines Spaltes (85) so weit relativ zueinander bewegt werden, bei dem das Filterpapier (90) mit einem definierten Druck in dem Spalt (85) niedergehalten wird, bei dem anschließend Stempel (82) und Matrize (83) derart relativ zueinander einfahren, daß dabei das Filterpapier (90) durch den Spalt (85) zwischen Niederhalter (84) und Matrize (83) in die Hohlform (97) zwischen Stempel (82) und Matrize (83) eingezogen und geformt wird und bei dem nach Ausfahren des Stempels (82) aus der Matrize (83) und nach Entfernen des Niederhalters (84) das ausgeformte Filterelement (28) aus dem Werkzeug (92) entnommen werden kann, wobei die Formung des Filterelements (28) durch Faltung des Filterpapiers (90) beim Einzug in die Hohlform (97) entsteht, wobei die Matrize (83), der Stempel (82) und der Niederhalter (84) in den formgebenden Bereichen die Oberfläche des Filterelements (28) nach den Merkmalen des Patentanspruchs 14 aufweisen, so daß am Rand der Matrize (83) und am Stempel (82) keil- oder wellenförmige Einschnitte (96) und an der Hohlform (97) der Matrize (83) und am Niederhalter (84) keil- oder wellenförmige Erhebungen (95) entstehen.

25. Verfahren nach Anspruch 24,
**dadurch gekennzeichnet**,
daß am Ende des Formvorgangs der Rand (39) des Filterelements (28) durch den Niederhalter (84) gegen die Matrize (83) gepreßt wird.

26. Verfahren nach Anspruch 25,
**dadurch gekennzeichnet**,
daß der Niederhalter (84) aus zwei Ringteilen (86, 87) besteht und daß der innere Ring (86) den Rand (39) des Filterelements (28) endverformt, während der äußere Ring (87) nicht mehr oder nur sehr wenig im Eingriff ist.

27. Verfahren nach Anspruch 26,
**dadurch gekennzeichnet**,
daß die Mitte (88) des Filterpapiers (90) während des Umformprozesses durch geeignete Fixiermittel (89) im Werkzeug (92) gehalten wird.

28. Verfahren nach Anspruch 27,
**dadurch gekennzeichnet**,
daß die Fixiermittel (89) durch einen aus der Matrize (83) beweglich heraus- bzw. hereinfahrenden Gegenhalter gebildet wird, der das Filterpapier (90) am Stempel (82) fixiert.

29. Verfahren nach Anspruch 27,
**dadurch gekennzeichnet**,
daß die Haltemittel durch Saugkräfte realisiert sind.

30. Verfahren nach Anspruch 24,
**dadurch gekennzeichnet**,
daß das Filterpapier (90) aus einer runden Kreisscheibe (93) hergestellt ist.

31. Verfahren nach Anspruch 30,
**dadurch gekennzeichnet**,
daß ein Stapel (112) von kreisförmigen Filterpapierscheiben (93) in einem einzigen Ausformvorgang zu Filterelementen (28) ausgeformt werden.

32. Verfahren nach Anspruch 26,
**dadurch gekennzeichnet**,
daß im voll eingefahrenen Zustand von Matrize (83), Stempel (82) und Niederhalter (84) die zusammenwirkenden Erhebungen (95) und Einschnitte (96) mindestens einen so großen Abstand haben, daß das Filterpapier in den Seitenwandungen (53, 54) nicht gepreßt wird.

33. Verfahren nach Anspruch 24,
**dadurch gekennzeichnet**,
daß in die kreisförmige Filterpapierscheibe (93) geradlinige und radial nach außen verlaufende Preßkanten eingebracht werden, an denen dann beim Umformen des oder der Filterelemente (28) die Falten (56, 57) entstehen.

## Claims

1. A filtering device for making brewed beverages, comprising a filter support (1) and a filter element (28) fabricated from filter paper which has a receiving cavity (76) to be filled with extractable materials such as coffee grounds or tea leaves which, following contact with hot water, deliver extractive substances to the water, resulting in a brewed beverage that is drained from the filter element (28), said filter element (28) being held by supporting means (39, 24) which include a rim (39) formed on the filter element (28) and having a bearing surface (40), and a supporting surface (24) formed on the filter support (1), said rim (39) extending in a direction away from the receiving cavity (76) of the filter element (28) outwardly, said bearing surface (40) of the rim (39) bearing against the supporting surface (24) formed on the filter support (1) upon insertion of the filter element (28), and said rim (39) of the filter element (28) being reinforced mechanically by pleating (51, 52) the filter paper,
**characterized in that** the pleats (51, 52) are configured as exposed pleats so that paper surfaces do not overlap, that the area bounding the receiving cavity (76) is equally pleated (51, 52), that the pleats (51, 52) in the rim (39) and in the receiving cavity (76) are of a zigzag or undulating structure in cross section, causing each crest pleat (52) to be followed by a root pleat (51) in the circumferential direction of the filter element (28), that in the radial direction of the filter element (28) at the junction of the transition area (30) with the rim (39), a crest pleat (52) changes into a root pleat (51) and vice versa, that the supporting surface (24) of the filter support (1) is likewise of a zigzag or undulating structure along its circumference as a result of which an elevation (115) is followed by a recess (79) in the circumferential direction of the filter support (1), said elevations and grooves cooperating with the crest pleats (52) and the root pleats (51) of the rim (39) of the filter element (28).

2. The filtering device as claimed in claim 1,
**characterized in that** the edge (39) is formed at the open end of the receiving cavity (76) of the filter element (28).

3. The filtering device as claimed in claim 1,
**characterized in that** the pleats (51, 52) in the area of the filter element (28) bounding the receiving cavity (76) are likewise configured as exposed pleats, whereby recesses (71) and elevations (72) are produced also in the area of the filter element (28) bounding the receiving cavity (76), that a transition area (26) adjoins the supporting surface (24) of the filter support (1), which transition area has a contour following the contour of the area (30) of the filter element (28) bounding the receiving cavity (76), and that the transition area (26) has corresponding elevations (115) and recesses (79) along its circumference with which the recesses (71) and elevations (72) of the filter element (28) cooperate.

4. The filtering device as claimed in claim 1,
**characterized in that** an upwardly open basket (33) formed of individual braces (34) and capable of receiving the filter element (28) adjoins the supporting surfaces (24) of the filter support (1).

5. The filtering device as claimed in claim 4,
**characterized in that** the braces (34) on the basket (33) are formed essentially only above the maximum filling level for the extractable materials.

6. The filtering device as claimed in claim 1,
**characterized in that** during the brewing cycle a water layer penetrates between the holding means (39, 40, 24) of the filter element (28) and the filter support (1), and that said water layer produces an adhesive effect between the filter element (28) and the filter support (1) which contributes to the securing of the filter element (28) onto the filter support (1).

7. The filtering device as claimed in claim 6,
**characterized in that** liquid in the filter paper is directed to the holding means (39, 40) due to capillary action.

8. The filtering device as claimed in claim 1,
**characterized in that** the angle (55) between the supporting surface (24) of the filter support (1) and the vertical axis (43) of the filtering device is smaller than or equal to 90°.

9. The filtering device as claimed in claim 1,
**characterized in that** the rim (39) of the filter element (28) is additionally urged against the supporting surface (24) on the filter support (1) by means of a retaining device (38) acting against the rim (39) of the filter element (28).

10. The filtering device as claimed in claim 1,
**characterized in that** the filter support (1) includes a filter housing (16) encompassing the filter element (28), that the outer contour (29) of the receiving cavity (76) of the filter element (28) and the outer contour of the filter housing (16) follow each the contour of an ellipsoid, and that the filter element (28), in suspended position, is invariably spaced from the filter housing (16).

11. The filtering device as claimed in claim 10,
**characterized in that** the outer contour (29) of the receiving cavity (76) of the filter element (28) and the outer contour of the filter housing (16) are of a hemispherical configuration.

12. The filtering device as claimed in claim 1,
**characterized in that** the filter support (1) is composed of two or more parts (32, 36).

13. The filtering device as claimed in claim 1,
**characterized in that** the filtering device is part of an electrically powered beverage making apparatus (3) for domestic use, in which water is heated in an electric water heater to be subsequently fed to a percolator disposed above the filtering device (1, 28), whence it flows onto the extractable material, extracts extractive substances therefrom, and is drained as a brewed beverage.

14. A filter element (28) fabricated from filter paper having a mouth and a receiving cavity (76) to be filled with extractable materials such as coffee grounds or tea leaves, further having a rim (39) extending in a direction away from the receiving cavity (76), said rim (39) being pleated (51, 52) for reinforcement,
**characterized in that** the pleats (51, 52) are configured as exposed pleats so that paper surfaces do not overlap, that the area bounding the receiving cavity (76), being formed into shape from filter paper, is equally pleated (51, 52), that the pleats (51, 52) in the rim (39) and in the receiving cavity (76) are of a zigzag or undulating structure in cross section, causing each crest pleat (52) to be followed by a root pleat (51) in the circumferential direction of the filter element (28), and that in the radial direction of the filter element (28) at the junction of the transition area (30) with the rim (39) a crest pleat (52) changes into a root pleat (51) and vice versa.

15. The filter element as claimed in claim 14,
**characterized in that** the filter paper is made of an annular filter paper blank.

16. The filter element as claimed in claim 14,
**characterized in that** the pleats (51, 52) extend in the longitudinal direction of the filter element (28) from the area of the bottom (62) up into the rim (39).

17. The filter element as claimed in claim 14,
**characterized in that** the pleats (51, 52) extend radially outwardly.

18. The filter element as claimed in claim 14,
**characterized in that** a sharp corner (41) is formed on the filter element (28) at the junction of the rim (39) with the transition area (30).

19. The filter element as claimed in claim 14,
**characterized in that** the filter element (28) is integrally made of filter paper, and that said filter paper has a gsm substance of 20 to 60, preferably 35 grams per square meter.

20. The filter element as claimed in claim 14,
**characterized in that** the outer contour (32) of the receiving cavity (76) of the filter element (28) lies inside the space formed by the outer surfaces of two ellipsoids, and that nowhere in the space thus defined is the shortest relative distance of the two outer surfaces greater than 8 mm.

21. The filter element as claimed in claim 14,
**characterized in that** in the area of the filter element (28) bounding the receiving cavity (76) the pleats (51, 52) start at different levels, preferably two short pleats (57) alternating with one long pleat (56).

22. The filter element as claimed in claim 14,
**characterized in that** the depth (t) of the pleats (51, 52) increases from their beginning (pointed ends 58, 59) radially outwardly.

23. The filter element as claimed in claim 14,
**characterized in that** one or several tabs (117) are formed on the rim (39) to aid in handling.

24. A method of manufacturing one or several filter elements (28) to be formed from filter paper (90) as claimed in claim 14, wherein the die assembly (92) for manufacturing one or several filter elements (28) comprises a punch half (82), a blankholder (84) and a die half (83), wherein further one or several filter papers (90) are loaded between the blankholder (84) and the die half (83), wherein subsequently the blankholder (84) and the die half (83) perform a relative approaching movement until a clearance space (85) is formed, wherein the filter paper (90) is held down in the clearance space (85) at a defined pressure, wherein subsequently the punch half (82) and the die half (83) approach each other such that the filter paper (90) is drawn through the clearance space (85) between the blankholder (84) and the die half (83) into the die cavity (97) between the punch half (82) and the die half (83) for forming, and wherein, after the punch half (82) has traveled out of the die half (83) and the blankholder (84) has been removed, the formed filter element (28) can be withdrawn from the die assembly (92), the filter element (28) being formed to the desired shape by pleating the filter paper (90) as it is drawn into the die cavity (97), wherein the forming regions of the die half (83), the punch half (82) and the blankholder (84) reflect the surface of the filter element (28) according to the features of patent claim 14, so that the edge of the die half (83) and the punch half (82) are provided with V-shaped or undulating recesses (96), and the die cavity (97) of the die half (83) and the blankholder (84) are provided with V-shaped or undulating elevations (95).

25. The method as claimed in claim 24,
**characterized in that** at the end of the forming operation the rim (39) of the filter element (28) is pressed against the die half (83) by the blankholder (84).

26. The method as claimed in claim 25,
**characterized in that** the blankholder (84) is formed of two ring parts (86, 87), and that the inner ring (86) forms the rim (39) of the filter element (28) to its final shape, while the outer ring (87) is no longer in engagement or to a small degree only.

27. The method as claimed in claim 26,
**characterized in that** during the forming operation the center (88) of the filter paper (90) is held in the die assembly (92) by suitable locating means (89).

28. The method as claimed in claim 27,
**characterized in that** said locating means (89) include a movable retainer traveling in and out of the die half (83) and locating the filter paper (90) on the punch half (82).

29. The method as claimed in claim 27,
**characterized in that** suction forces are used as locating means.

30. The method as claimed in claim 24,
**characterized in that** the filter paper (90) is fabricated from a circular blank (93).

31. The method as claimed in claim 30,
**characterized in that** a stack (112) of circular filter paper blanks (93) is formed into filter elements (28) in a single forming operation.

32. The method as claimed in claim 26,
**characterized in that**, with the die half (83), the punch half (82) and the blankholder (84) in fully closed position, the cooperating elevations (95) and recesses (96) are at least at such a relative distance that the filter paper in the side walls (53, 54) is not pressed.

33. The method as claimed in claim 24,
**characterized in that** rectilinear and radially outwardly extending press edges are produced in the circular filter paper blank (93), from which the pleats (56, 57) are subsequently produced as the filter element(s) (28) is (are) formed.

## Revendications

1. Dispositif de filtrage pour préparer des boissons infusées, comportant un porte-filtre (1) et un élément filtrant (28) en papier filtre qui comprend à son tour une chambre de réception (76) pour le remplissage avec des matières d'extraction, telles que du café en poudre ou des feuilles de thé, qui, après leur mise en contact avec de l'eau chaude, dégagent des substances d'extraction dans l'eau, de sorte qu'une boisson infusée s'écoule hors de l'élément filtrant (28), l'élément filtrant (28) étant supporté par des moyens de maintien (39, 24) qui sont constitués par une bordure (39) formée sur l'élément filtrant (28) avec une surface porteuse (40) et par une surface d'appui (24) réalisée sur le porte-filtre (1), la direction d'extension de la bordure (39) étant dirigée en éloignement depuis la chambre de réception (76) de l'élément filtrant (28) vers l'extérieur, la surface porteuse (40) de la bordure (39) s'appuyant, après mise en place de l'élément filtrant (28), contre la surface d'appui (24) formée sur le porte-filtre (1), et la bordure (39) de l'élément filtrant (28) étant renforcée mécaniquement par des plissures (51, 52) du papier filtre, caractérisé en ce que les plissures (51, 52) sont réalisées sous forme de plissures ouvertes, de sorte qu'il n'apparaît aucun chevauchement de surfaces de papier, en ce que la zone délimitant la chambre de réception (76) comprend également des plissures (51, 52), en ce que les plissures (51, 52) sur la bordure (39) et sur la chambre de réception (76) présentent dans leur section transversale une structure en zigzag ou ondulée, et que par conséquent une plissure concave (51) se raccorde ainsi en direction périphérique de l'élément filtrant (28) à une plissure convexe (52), en cc qu'il apparaît, en direction radiale de l'élément filtrant (28), à la transition de la zone transitoire (30) vers la bordure (39), une inversion d'une plissure convexe (52) en une plissure concave (51) et inversement, en ce que la surface d'appui (24) du porte-filtre (1) présente également une structure en zigzag ou ondulée sur le tracé de sa périphérie et qu'un creux (79) se raccorde donc en direction périphérique du porte-filtre (1) à une bosse (115), avec lesquel(le)s coopèrent les plissures convexes (52) et les plissures concaves (51) de la bordure (39) de l'élément filtrant (28).

2. Dispositif de filtrage selon la revendication 1, caractérisé en ce que la bordure (39) est réalisée à l'extrémité ouverte de la chambre de réception (76) de l'élément filtrant (28).

3. Dispositif de filtrage selon la revendication 1, caractérisé en ce que, dans la zone de l'élément filtrant (28) qui délimite la chambre de réception (76), les plissures (51, 52) sont également réalisées sous forme de plissures ouvertes, grâce auxquelles se forment des creux (71) et des bosses (72) également dans la zone de l'élément filtrant (28) qui délimite la chambre de réception (76), en ce qu'à la surface d'appui (24) du porte-filtre (1) se raccorde une zone transitoire (26) dont le contour suit le contour de la zone (30) de l'élément filtrant (28) délimitant la chambre de réception (76), en ce que la zone transitoire (26) comprend également des bosses (115) et creux (79) correspondants au tracé de sa périphérie, avec lesquel(le)s coopèrent les creux (71) et bosses (72) de l'élément filtrant (28).

4. Dispositif de filtrage selon la revendication 1, caractérisé en ce que, aux surfaces d'appui (24) du porte-filtre (1), se raccorde un panier (33) formé par des traverses individuelles (34) et ouvert vers le haut, qui peut loger l'élément filtrant (28).

5. Dispositif de filtrage selon la revendication 4, caractérisé en ce que les traverses (34) sont réalisées sur le panier (33) sensiblement uniquement au-dessus de la hauteur de remplissage maximale pour les matières d'extraction.

6. Dispositif de filtrage selon la revendication 1, caractérisé en ce que pendant l'opération d'infusion une couche d'eau pénètre entre les moyens de maintien (39, 40, 24) de l'élément filtrant (28) et le porte-filtre (1), et en ce que la couche d'eau entre l'élément filtrant (28) et le porte-filtre (1) génère un effet d'adhésion qui assiste au maintien de l'élément filtrant (28) sur le porte-filtre (1).

7. Dispositif de filtrage selon la revendication 6, caractérisé en ce qu'en raison de l'effet capillaire, le liquide dans le papier filtre est amené aux moyens de maintien (39, 40).

8. Dispositif de filtrage selon la revendication 1, caractérisé en ce que l'angle (55) entre la surface d'appui (24) du porte-filtre (1) et l'axe vertical (43) du dispositif de filtrage est inférieur ou égal à 90°.

9. Dispositif de filtrage selon la revendication 1, caractérisé en ce que la bordure (39) de l'élément filtrant (28) est en supplément repoussée contre la surface d'appui (24) sur le porte-filtre (1) par un dispositif de maintien complémentaire (38) agissant contre la bordure (39) de l'élément filtrant (28).

10. Dispositif de filtrage selon la revendication 1, caractérisé en ce que le porte-filtre (1) comporte un boîtier de filtre (16) qui entoure l'élément filtrant (28), en ce que le contour extérieur (29) de la zone de réception (76) de l'élément filtrant (28) et du boîtier de filtre (16) suivent chacun le contour d'un ellipsoïde, et en ce que lorsque l'élément filtrant (28) est accroché, celui-ci s'étend constamment à distance du boîtier de filtre (16).

11. Dispositif de filtrage selon la revendication 10, caractérisé en ce que le contour extérieur (29) de la zone de réception (76) de l'élément filtrant (28) et du boîtier de filtre (16) est réalisé sous forme hémisphérique.

12. Dispositif de filtrage selon la revendication 1, caractérisé en ce que le porte-filtre (1) est composé par deux ou plusieurs éléments (32, 36).

13. Dispositif de filtrage selon la revendication 1, caractérisé en ce que le dispositif de filtrage fait partie d'une machine (3) électrique pour préparer des boissons dans le secteur domestique, dans laquelle de l'eau est chauffée dans un chauffe-eau électrique, qui est alors amenée à son tour à un percolateur réalisé au-dessus du dispositif de filtrage (1, 28), d'où elle s'écoule alors sur la matière d'extraction, y fait extraire les substances d'extraction hors de la matière d'extraction, et s'écoule en tant que boisson inlusée.

14. Elément filtrant (28) en papier filtre qui comporte à son tour une ouverture et une chambre de réception (76) pour le remplissage avec des matières d'extraction, telles que du café en poudre ou des feuilles de thé, qui est en outre pourvu d'une bordure (39) dont la direction d'extension est dirigée en éloignement de la chambre de réception (76), la bordure (39) étant renforcée par des plissures (51, 52), caractérisé en ce que les plissures (51, 52) sont réalisées sous forme de plissures ouvertes, de sorte qu'il n'apparaît aucun chevauchement de surfaces de papier, en ce que la zone délimitant la chambre de réception (76) comprend également des plissures (51, 52), en raison de sa fabrication par mise en forme en papier filtre, en ce que les plissures (51, 52) sur la bordure (39) et sur la chambre de réception (76) présentent dans leur section transversale une structure en zigzag ou ondulée et qu'une plissure concave (51) se raccorde ainsi en direction périphérique de l'élément filtrant (28) à une plissure convexe (52) respective, et en ce qu'il apparaît, en direction radiale de l'élément filtrant (28), à la transition de la zone transitoire (30) vers la bordure (39), une inversion d'une plissure convexe (52) en une plissure concave (51) et inversement.

15. Elément filtrant selon la revendication 14, caractérisé en ce que le papier filtre est constitué par un disque de papier filtre annulaire.

16. Elément filtrant selon la revendication 14, caractérisé en ce que les plissures (51, 52) s'étendent en direction longitudinale de l'élément filtrant (28) depuis la zone du fond (62) jusque dans la bordure (39).

17. Elément filtrant selon la revendication 14, caractérisé en ce que les plissures (51, 52) s'étendent radialement vers l'extérieur.

18. Elément filtrant selon la revendication 14, caractérisé en ce qu'un coin vif (41) est réalisé à la transition de la bordure (39) vers la zone transitoire (30) sur l'élément filtrant (28).

19. Elément filtrant selon la revendication 14, caractérisé en ce que l'élément filtrant (28) est réalisé en une seule pièce en papier filtre, et en ce que le papier filtre présente un grammage de 20 à 60 grammes, de préférence 35 grammes par mètre carré.

20. Elément filtrant selon la revendication 14, caractérisé en ce que le contour extérieur (32) de la chambre de réception (76) de l'élément filtrant (28) se trouve à l'intérieur de l'espace formé par les surfaces extérieures de deux ellipsoïdes, et en ce que la distance respectivement la plus courte des deux surfaces extérieures n'est supérieure à 8 mm à aucun emplacement de l'espace ainsi défini.

21. Elément filtrant selon la revendication 14, caractérisé en ce que les plissures (51, 52) sur la zone de l'élément filtrant (28) délimitant la chambre de réception (76) partent depuis des hauteurs différentes, et de préférence deux plissures courtes (57) alternent avec une plissure longue (56).

22. Elément filtrant selon la revendication 14, caractérisé en ce que la profondeur (t) des plissures (51, 52) augmente depuis leur début (pointes 58, 59) radialement vers l'extérieur.

23. Elément filtrant selon la revendication 14, caractérisé en ce que sur la bordure (39) sont réalisées une ou plusieurs pattes (117) en tant qu'aide à la manipulation.

24. Procédé pour fabriquer un ou plusieurs éléments filtrants (28), à former en papier filtre (90), selon la revendication 14, dans lequel l'outil (92) pour fabriquer un ou plusieurs éléments filtrants (28) est constitué par un poinçon (82), par un serre-flan (84), et par une matrice (83), dans lequel on introduit en outre un ou plusieurs papiers filtres (90) entre le serre-flan (84) et la matrice (83), puis on déplace le serre-flan (84) et la matrice (83) l'un par rapport à l'autre pour former une fente (85), on serre le papier filtre (90) avec une pression définie dans la fente (85), puis on déplace le poinçon (82) et la matrice l'un par rapport à l'autre, de sorte que le papier filtre (90) est tiré et mis en forme à travers la fente (85) entre le serre-flan (84) et la matrice (83) jusque dans le moule creux (97) entre le poinçon (82) et la matrice (83), et dans lequel, après avoir sorti le poinçon (82) hors de la matrice (83) et après avoir enlevé le serre-flan (84), on peut sortir l'élément filtrant mis en forme (28) hors de l'outil (92), la mise en forme de l'élément filtrant (28) étant réalisée par pliage dit papier filtre (90) lors de l'introduction dans le moule creux (97) ; la matrice (83), le poinçon (82) et le serre-flan (84) présentant, dans les zones participant à la mise en forme, la surface de l'élément filtrant (28) selon les caractéristiques de la revendication 14, de sorte que des creux (96) en forme de coin ou ondulés se forment au bord de la matrice (83) et sur le poinçon (82) et que des bosses (95) en forme de coin ou ondulées se forment sur le moule creux (97) de la matrice (83) et sur le serre-flan (84).

25. Procédé selon la revendication 24, caractérisé en ce qu'à la fin de l'opération de mise en forme, la bordure (39) de l'élément filtrant (28) est pressée par le serre-flan (84) contre la matrice (83).

26. Procédé selon la revendication 25, caractérisé en ce que le serre-flan (84) est constitué par deux éléments annulaires (86, 87), et en ce que l'anneau intérieur (86) met en forme finale la bordure (39) de l'élément filtrant (28), tandis que l'anneau extérieur (87) n'est plus en engagement ou ne l'est que très peu.

27. Procédé selon la revendication 26, caractérisé en ce que le milieu (88) du papier filtre (90) est maintenu dans l'outil (92) par des moyens de fixation appropriés (89) pendant l'opération de mise en forme.

28. Procédé selon la revendication 27, caractérisé en ce que les moyens de fixation (89) sont formés par un dispositif de maintien complémentaire qui est susceptible d'être déplacé hors ou dans la matrice (83) et qui fixe le papier filtre (90) sur le poinçon (82).

29. Procédé selon la revendication 27, caractérisé en ce que les moyens de maintien sont réalisés par des forces d'aspiration.

30. Procédé selon la revendication 24, caractérisé en ce que le papier filtre (90) est fabriqué à partir d'un disque circulaire rond (93).

31. Procédé selon la revendication 30, caractérisé en ce que l'on forme une pile (112) de disques circulaires (93) en papier filtre dans une seule opération de mise en forme pour former les éléments filtrants (28).

32. Procédé selon la revendication 26, caractérisé en ce que dans l'état entièrement rétracté de la matrice (83), du poinçon (82), et du serre-flan (84), les bosses (95) et les creux (96) en coopération présentent une distance au moins aussi importante que le papier filtre n'est pas pressé dans les parois latérales (53, 54).

33. Procédé selon la revendication 24, caractérisé en ce que l'on réalise dans le disque circulaire en papier filtre (93) des arêtes pressées qui s'étendent en ligne droite et radialement vers l'extérieur, au niveau desquelles se forment alors les plissures (56, 57) lors de la mise en forme du ou des éléments filtrants (28).
